# EUROPEAN PATENT SPECIFICATION

(11) **EP 2 213 564 B1**
(45) Date of publication and mention of the grant of the patent: **23.11.2016**
(21) Application number: 08842883.4
(22) Date of filing: 20.10.2008
(51) Int. Cl.: B62K 17/00, B62J 1/00, B62J 25/00, B62J 99/00, B62K 3/00, B62K 23/08

(54) **COAXIAL TWO-WHEELED VEHICLE**
KOAXIALZWEIRADFAHRZEUG
VÉHICULE A DEUX ROUES COAXIALES

(30) Priority: 22.10.2007 JP 2007273775; 31.07.2008 JP 2008198072
(43) Date of publication of application: 04.08.2010
(73) Proprietor: TOYOTA JIDOSHA KABUSHIKI KAISHA, Toyota-shi, Aichi-ken, 471-8571 (JP)
(72) Inventor: YAMANO, Ikuo, Toyota-shi Aichi 471-8571 (JP)
(74) Representative: D Young & Co LLP
(86) International application number: PCT/JP2008/068963
(87) International publication number: WO 2009/054344

(56) References cited:
- EP-A1- 1 695 896
- JP-A- 4 201 793
- JP-A- 2004 074 814
- JP-A- 2005 094 898
- JP-A- 2005 145 296
- JP-A- 2005 145 296
- JP-A- 2005 162 060
- JP-A- 2006 315 666
- JP-A- 2006 353 080
- US-A1- 2006 260 857

## Description

### Technical Field

The present invention relates to a coaxial two-wheeled vehicle having two wheels disposed on the same axial centerline, in particular a coaxial two-wheeled vehicle on which a person rides and operates for traveling.

### Background Art

Patent document 1 discloses an example of a coaxial two-wheeled vehicle in the related art. This Patent document 1 describes a technique relating to a vehicle body structure of a coaxial two-wheeled vehicle. In patent document 1, a vehicle is equipped with left and right divided steps rotatable in the roll direction and a handle that changes the posture of the divided steps. In this way, it solves a problem that a coaxial two-wheeled vehicle tumbles down in a transverse direction due to the effect of a centrifugal force when the coaxial two-wheeled vehicle performs a turning movement, and a similar problem. Further, as for the handle structure, Patent document 1 discloses, in addition to a type of handle structure that is operated by a passenger by using the hands and arms, a type of coaxial two-wheeled vehicle that is operated by using a movement of the legs (see Figs. 22 to 24 of Patent document 1).

Patent document 2 discloses a structural example of a coaxial two-wheeled vehicle having no handle. In a coaxial two-wheeled vehicle disclosed in this document, a boarding pedestal that can be tilted in front/back and left/right directions is disposed on the top of the vehicle body. A weight shift is detected based on the inclination angle of this boarding pedestal in each of front/back and left/right directions, and by doing so, each of the forward/backward movement control and the turning control is performed.

Patent document 3 discloses a structure for a vehicle that enables a vehicle that has a seat for accommodating a passenger and adopts one ball or a coaxial two-wheel structure and thus being unstable to travel by using posture control.

Incidentally, Patent document 4 discloses a coaxial two-wheeled vehicle in which a support portion is erected from a bedplate. The support portion is sandwiched by the legs so that the posture of the passenger is supported. In this support portion, a shaking piece that rotates in the roll direction like a seesaw is provided. The passenger operates pedals at both ends of this shaking piece, and thus realizing the turning of the coaxial two-wheeled vehicle. That is, Patent document 4 does not adopt a structure that realizes turning by the tilting movement of the turning operation portion in the roll direction.
[Patent Document 1]
   Japanese Unexamined Patent Application Publication No. 2006-315666
[Patent Document 2]
   Japanese Unexamined Patent Application Publication No. 2005-94898
[Patent Document 3]
   Japanese Unexamined Patent Application Publication No. 4-201793
[Patent Document 4]
   Japanese Unexamined Patent Application Publication No. 2006-353080
[Patent Document 5] European Application EP 1 695 896 A1 according to the preamble of claim 1.

### Disclosure of Invention

### Technical Problem

Among vehicle body structures disclosed in Patent document 1, the type in which a turning operation is realized by operation by legs does not restrain hands and arms during the riding. Therefore, actions by hands and arms, such as holding a baggage and handling an object, can be performed without restraint. However, in order to realize a turning operation, both knees of the passenger need to be in contact with a pair of knee-receiving members disposed in the front part of the vehicle body. Therefore, the movement of the passenger's legs is significantly restrained. As a result, for example, in a situation where, when a vehicle runs into a step having a height the vehicle cannot run over, the posture control of the vehicle is disrupted and the vehicle thereby tumbles down, there is a high possibility that the passenger could also fall down with the vehicle, and thus it is dangerous. Further, due to the pair of knee-receiving members, the relative positional relation between both knees of the passenger and the positional relation between the vehicle and the passenger are also restrained. Therefore, it is very difficult for the passenger to realize turning of the vehicle by tilting his/her body in the left and right directions without restraint.

A coaxial two-wheeled vehicle disclosed in Patent document 2 can solve the problem of Patent document 1 in terms that an action taken by the passenger to avoid danger is not hampered because it has no handle. However, in this coaxial two-wheeled vehicle, the vehicle body does not have any portion that receives the weight of and force exerted by the passenger except for the boarding pedestal that generates turning commands. Therefore, there is a high possibility that an accidental turning action could occur during the vehicle is traveling in a straight line due to a disturbance such as unevenness and inclination on the road surface, and thus deteriorating the maneuverability. Further, the effect of a centrifugal force exerted on the passenger during a turning movement is directly reflected on the turning command to the vehicle. Therefore, it is believed that the realization of a speedy turning action exactly as the passenger intended is very difficult.

In a coaxial two-wheeled vehicle disclosed in Patent document 3, its action is hampered by the seat and the like. Therefore, it is difficult for a passenger to swiftly get on or get off the front part or rear part of the vehicle. Therefore, for example, in case that the vehicle tumbles down in the backward direction due to an abnormality in the control or the like on a climbing road surface, it requires large-scale equipment to ensure the safety of the passenger who could fall down with the vehicle.

The present invention has been made to solve these problems, and an object thereof is to provide a coaxial two-wheeled vehicle having a high level of safety and a superior level of convenience in getting on or off the vehicle.

### Technical Solution

A coaxial two-wheeled vehicle in accordance with the present invention is a coaxial two-wheeled vehicle that, when a traveling direction is defined as a roll axis, realizes a turning action by a tilting movement of a turning operation portion toward the roll direction, wherein the turning operation portion is disposed between legs of a passenger and has a structure that does not restrain a movement of the leg in forward/backward directions of the vehicle, and a portion of the turning operation portion comes into contact with the leg of the passenger so that a turning operation is performed.

Note that the turning operation portion preferably comes into contact with the passenger at its knee pad portion(s) disposed at a height of the knee of the passenger.

Further, the turning operation portion preferably includes an operation bar that supports the knee pad portion from beneath, and an adjustment portion that adjusts the length of the operation bar.

Further, the knee pad portion preferably includes a grip for use in getting on/off that can be grasped by a passenger on the front side in the traveling direction.

In this case, a getting-off switch that stops the posture control of the vehicle is preferably provided in the vicinity of the grip for use in getting on/off.

Further, the turning operation portion preferably comes into contact with the passenger at a calf pad portion(s) disposed at the height of the calf of the passenger.

Note that it further includes a vehicle main body that supports the turning operation portion in such a manner that the turning operation portion is rotatable in the roll direction, and the calf pad portion is preferably formed in the vicinity of the upper end portion of a ring-shaped member that extends upward from the vicinity of the vehicle main body and bends backward.

The turning operation portion preferably comes into contact with the passenger at a saddle portion which is provided on the upper end of the turning operation portion and on which the passenger can sit. This turning operation portion preferably includes an operation bar that supports the knee pad portion from beneath, and an adjustment portion that adjusts the length of the operation bar.

In a typical exemplary embodiment, it includes: a vehicle main body that supports the turning operation portion in such a manner that the turning operation portion is rotatable in the roll direction; a pair of wheels that are disposed on the same axis on both sides in a direction orthogonal to the traveling direction of the vehicle main body and rotatablly supported on the vehicle main body; wheel driving means to independently and rotationally drive the pair of wheels; and control means to control rotational driving of wheels by the wheel driving means according to a tilting movement of the turning operation portion in the roll direction.

Further, it preferably includes a step portion (s) which is supported on the vehicle main body and rotatable in the roll direction in conjunction with the turning operation portion, and on which the passenger rides.

### Advantageous Effects

In accordance with the present invention, a coaxial two-wheeled vehicle having a high level of safety and a superior level of convenience in getting on or off the vehicle can be provided.

### Brief Description of Drawings

Fig. 1 is a perspective view of external appearance of a coaxial two-wheeled vehicle in accordance with a first exemplary embodiment of the invention;
Fig. 2 is a front view of a part of a coaxial two-wheeled vehicle in accordance with a first exemplary embodiment of the invention;
Fig. 3 is a block diagram showing a schematic structure of a control unit of a coaxial two-wheeled vehicle in accordance with a first exemplary embodiment of the invention;
Fig. 4 is a perspective view of external appearance showing a state where a passenger is on a coaxial two-wheeled vehicle in accordance with a first exemplary embodiment of the invention;
Fig. 5 is an explanatory diagram showing a state where a passenger on a coaxial two-wheeled vehicle in accordance with a first exemplary embodiment of the invention performs an inward tilting action;
Fig. 6 is an explanatory diagram showing an action of a passenger when a coaxial two-wheeled vehicle in accordance with a first exemplary embodiment of the invention tumbles down at a step;
Fig. 7 is a perspective view of external appearance of a coaxial two-wheeled vehicle in accordance with a second exemplary embodiment of the invention;
Fig. 8 is an enlarged perspective view showing a getting-off switch and its periphery in an enlarged state;
Fig. 9 is a perspective view of external appearance of a coaxial two-wheeled vehicle in accordance with a third exemplary embodiment of the invention;
Fig. 10 is a perspective view of external appearance showing a state where a passenger is on a coaxial two-wheeled vehicle in accordance with a third exemplary embodiment of the invention;
Fig. 11 is a perspective view of external appearance of a coaxial two-wheeled vehicle in accordance with a fourth exemplary embodiment of the invention;
Fig. 12 is a perspective view of external appearance showing a state where a passenger is on a coaxial two-wheeled vehicle in accordance with a fourth exemplary embodiment of the invention;
Fig. 13 is a side view showing a state where a passenger is on a coaxial two-wheeled vehicle in accordance with a fourth exemplary embodiment of the invention;
Fig. 14 is an explanatory diagram showing an aspect in which a passenger on a coaxial two-wheeled vehicle in accordance with a fourth exemplary embodiment of the invention performs a danger avoiding action to the backward;
Fig. 15 is a perspective view of external appearance of a coaxial two-wheeled vehicle in accordance with a fifth exemplary embodiment of the invention;
Fig. 16 is a side view showing a state where a passenger is on a coaxial two-wheeled vehicle in accordance with a fifth exemplary embodiment of the invention;
Fig. 17 is a perspective view of external appearance of a coaxial two-wheeled vehicle in a transportation state in a fifth exemplary embodiment of the invention;
Fig. 18 is an explanatory diagram showing an aspect where a coaxial two-wheeled vehicle in accordance with a fifth exemplary embodiment of the invention is transported;
Fig. 19 is an explanatory diagram for explaining the position of the center of gravity with regard to a coaxial two-wheeled vehicle in a transportation state in a fifth exemplary embodiment of the invention;
Fig. 20A is a perspective view for explaining a folding action of a coaxial two-wheeled vehicle in accordance with a fifth exemplary embodiment of the invention;
Fig. 20B is a perspective view for explaining a folding action of a coaxial two-wheeled vehicle in accordance with a fifth exemplary embodiment of the invention;
Fig. 21A is a perspective view for explaining a folding action of a coaxial two-wheeled vehicle in accordance with a fifth exemplary embodiment of the invention;
Fig. 21B is a perspective view for explaining a folding action of a coaxial two-wheeled vehicle in accordance with a fifth exemplary embodiment of the invention;
Fig. 22 is a partially-transparent diagram showing a structure of a rotation shaft of a turning operation portion of a coaxial two-wheeled vehicle in accordance with a fifth exemplary embodiment of the invention;
Fig. 23A is a perspective view for explaining a folding action of a coaxial two-wheeled vehicle in accordance with a fifth exemplary embodiment of the invention;
Fig. 23B is a perspective view for explaining a folding action of a coaxial two-wheeled vehicle in accordance with a fifth exemplary embodiment of the invention;
Fig. 24A is a perspective view for explaining a folding action of a coaxial two-wheeled vehicle in accordance with a fifth exemplary embodiment of the invention;
Fig. 24B is a perspective view for explaining a folding action of a coaxial two-wheeled vehicle in accordance with a fifth exemplary embodiment of the invention;
Fig. 25 is a perspective view of external appearance of a coaxial two-wheeled vehicle in accordance with a sixth exemplary embodiment of the invention; and
Fig. 26 is an enlarged perspective view of a handle of a coaxial two-wheeled vehicle of a sixth exemplary embodiment of the invention.

### Explanation of Reference

- 10: COAXIAL TWO-WHEELED VEHICLE
- 11L, 11R: STEP PORTION
- 12: VEHICLE MAIN BODY
- 13L, 13R: WHEEL
- 14L, 14R: WHEEL DRIVE UNIT
- 15, 55, 65, 75: TURNING OPERATION PORTION
- 16: VEHICLE BODY UPPER MEMBER
- 16A: HOUSING PORTION
- 16B: BEARING PORTION
- 16C: RECEIVING PORTION
- 16D: CONCAVE CHIPPED PORTION
- 17: VEHICLE BODY LOWER MEMBER
- 17A: HOUSING PORTION
- 17B: BEARING PORTION
- 17C: RECEIVING PORTION
- 18L, 18R: SIDE MEMBER
- 21L, 21R: UPPER ROTATION SUPPORT PIN
- 22L, 22R: LOWER ROTATION SUPPORT PIN
- 24: OPERATION LEVER BRACKET
- 25: UPPER FRONT ROTATION SUPPORT SHAFT
- 26: LOWER-FRONT ROTATION SUPPORT SHAFT
- 31: ANGLE DETECTION SENSOR
- 31A: SHAFT PORTION
- 31B: DETECTION PORTION
- 32: FIXED PLATE
- 38: BATTERY
- 41: POWER-SUPPLY COVER
- 44L, 44R: DRIVE CIRCUIT
- 45: POSTURE SENSOR UNIT
- 46: CONTROL DEVICE
- 47: ARITHMETIC CIRCUIT
- 48: STORAGE DEVICE
- 49: EMERGENCY STOP SWITCH
- 51A, 51B, 51C: GROUND-TOUCHING PORTION
- 150: BASE MEMBER
- 151L, 151R: KNEE PAD PORTION
- 152: GRIP FOR USE IN GETTING ON/OFF
- 153: GETTING OFF SWITCH
- 154: OPERATION BAR
- 155: OPERATION-BAR HEIGHT ADJUSTMENT PORTION
- 551L, 551R, 751L, 751R: CALF PAD PORTION
- 552, 752: GRIP FOR TRANSPORTATION
- 553, 753: LOWER SIDE COUPLING PORTION
- 554L, 554R, 754L, 754R: QUICK LEVER
- 651: SADDLE PORTION
- 652: OPERATION BAR

### Best Mode for Carrying Out the Invention

### First exemplary embodiment of the invention

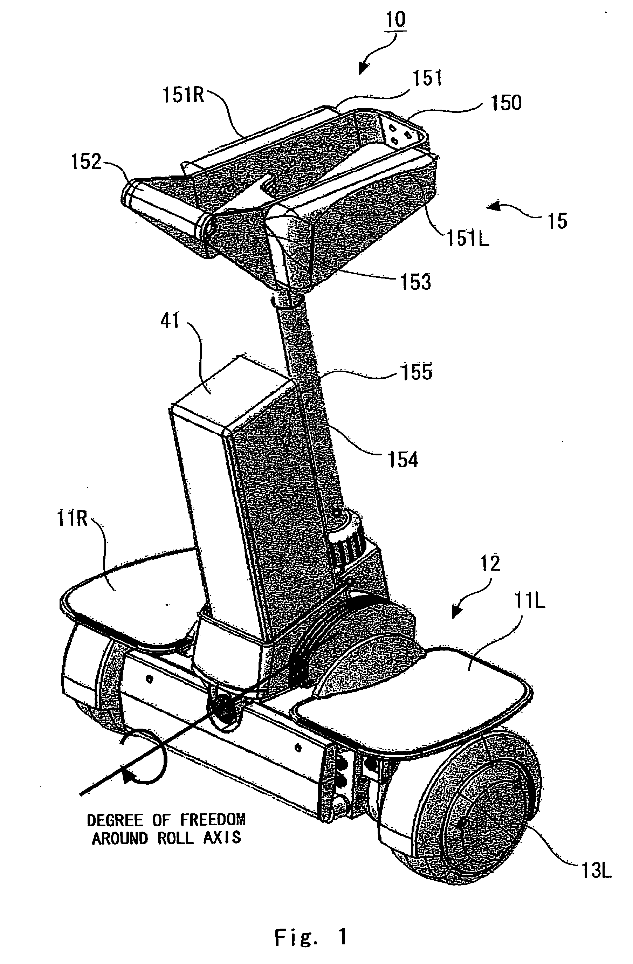

A structure of a coaxial two-wheeled vehicle in accordance with this first exemplary embodiment is explained with reference to a perspective view shown in Fig. 1. Note that in this specification, the pitch axis is an axis corresponding to the axle of a pair of wheels 13L and 13R. The roll axis is an axis that passes through the center of a vehicle main body 12 and is parallel to the traveling direction of the vehicle. The yaw axis is an axis that passes through the center of a vehicle main body 12 and is perpendicular to the road surface on which the vehicle travels.

The coaxial two-wheeled vehicle 10 includes a vehicle main body 12, wheels 13L and 13R, wheel drive units 14L and 14R, and a turning operation portion 15.

The turning operation portion 15 is operation means that is tilted in the roll direction so that the vehicle performs a turning operation. The turning operation portion 15 includes a base member 150, knee pad portions 151L and 151R, an operation bar 154, and an operation-bar height adjustment portion 155.

The base member 150 is a ring-shaped member in which both ends of an elongated plate member bent into a U-shape are coupled by another plate member. This base member 150 is fixed at the upper end of the operation bar 154.

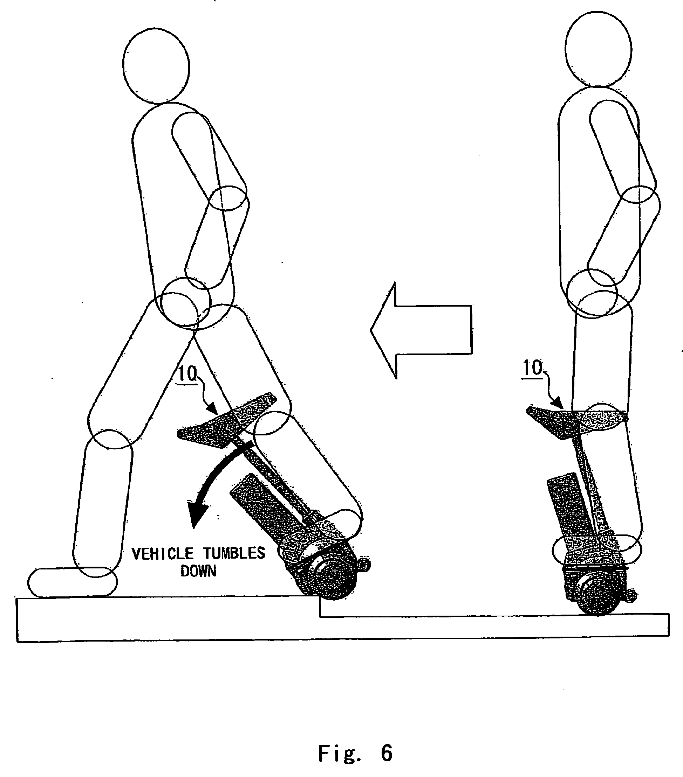

The knee pad portions 151L and 151R are respectively provided on both opposing sides of the base member 150. Each of these knee pad portions 151 has a rectangular ring shape with its long sides extending in the traveling direction when viewed from the top, and a grip for use in getting on/off 152 is formed on the front side of them. The grip for use in getting on/off 152 is grasped by one hand of a passenger when the passenger performs a getting on/off action. This grip for use in getting on/off 152 is a tubular member extending in the pitch axis direction. The grip for use in getting on/off 152 has a length and a diameter such that a passenger can easily grasp it with one hand. The grip for use in getting on/off 152 is used not only to facilitate getting on/off the vehicle, but also to lift up the vehicle and to pull the vehicle using casters located in the rear part of the vehicle (illustrated in Fig. 6).

A getting-off switch 153 is provided on the side in the vicinity of one end portion of the grip for use in getting on/off 152. The function of the getting-off switch 153 will be described later in detail.

The lower end of the operation bar 154 is attached to the vehicle main body 12 in such a manner that the operation bar 154 is rotatable in the roll direction. The operation-bar height adjustment portion 155 is means to enable the height of the operation bar to be adjusted. In this way, the height of the knee pad portions 151 can be changed for passengers of various heights.

The vehicle main body 12 supports the turning operation portion 15 in such a manner that the turning operation portion 15 is rotatable in the roll direction. A pair of wheels 13L and 13R are disposed on the same axis on both sides in a direction orthogonal to the traveling direction of the vehicle main body 12 and rotatablly supported on that vehicle main body 12. The wheel drive units 14L and 14R are wheel driving means to independently and rotationally drive the pair of wheels 13L and 13R.

On the top surface of the vehicle main body 12, two step portions 11L and 11R are provided on both left and right sides of the turning operation portion 15. A passenger puts each of his/her feet on the corresponding one of the step portions 11L and 11R to get on the vehicle. The step portions 11L and 11R are composed of a pair of plate elements, each of which is formed in the roughly same size as or slightly larger than the size of a human sole.

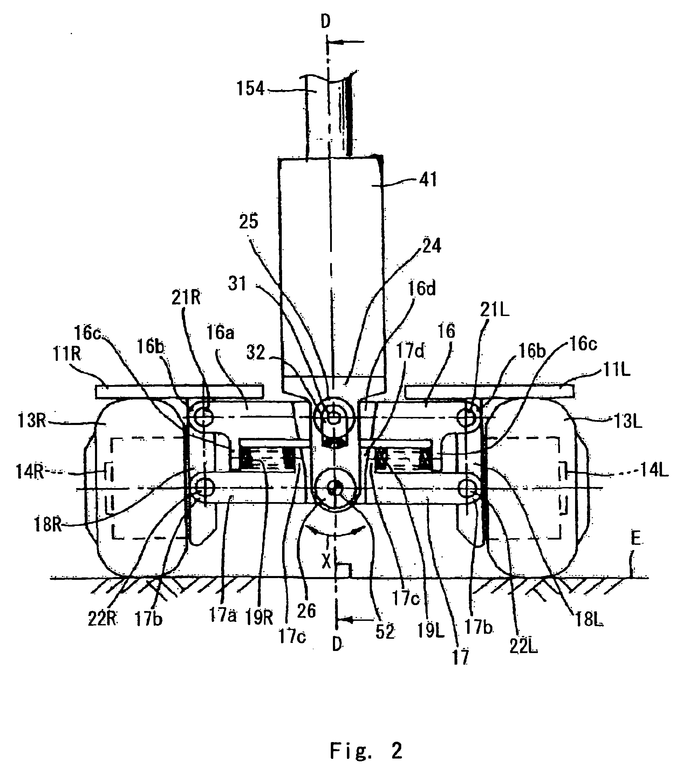

The vehicle main body 12 has a parallel link structure described in Patent document 1. This structure is explained in a concrete manner with reference to Fig. 2.

The vehicle main body 12 is constructed as a parallel link mechanism including a vehicle body upper member 16 and a vehicle body lower member 17 that are arranged above and below and in parallel to each other, and a pair of side members 18L and 18R that are arranged left and right of and in parallel to each other and rotatablly coupled to the vehicle body upper member 16 and the vehicle body lower member 17. A pair of coil springs 19L and 19R are interposed between the vehicle body upper member 16 and vehicle body lower member 17 having this parallel link mechanism. The coil springs 19L and 19R exert spring forces such that angles formed by the vehicle body upper member 16 and the vehicle body lower member 17 and the pair of side members 18L and 18R are respectively maintained at right angles.

The vehicle body upper member 16 and the vehicle body lower member 17 are respectively composed of roughly quadrangle housing portions 16a and 17a having openings on the bottom sides, four bearing portions 16b and 17b that are located at the four corners of the respective housing portions 16a and 17a and formed so as to protrude in the longitudinal direction, and pairs of spring receiving portions 16c and 16c, and 17c and 17c that are respectively formed so as to protrude to the respective opposing member sides. The sizes of the vehicle body upper member 16 and the vehicle body lower member 17 in the left/right direction, i.e., in the vehicle width direction are set to the same value. The four bearing portions 16b and 17b provided at the corner portions of the vehicle body upper member 16 and vehicle body lower member 17 are disposed such that, when both the members 16 and 17 are placed on top of each other, they overlap each other.

In this vehicle body upper member 16, a bearing hole is provided in each of three places, i.e., a center portion and both end portions in the left/right direction, i.e., in the longitudinal direction (six bearing holes in total in both front and rear surfaces). In the vehicle body lower member 17, a bearing hole is provided in each of three places, i.e., a center portion and both end portions in the left/right direction, i.e., in the longitudinal direction (five bearing holes in total because the rear surface includes only two places in both end portions). The end portion bearing holes at both ends of the vehicle body upper member 16 and the end portion bearing holes at both ends of the vehicle body upper member 16 are arranged at the same interval so that they correspond with each other. A pair of side members 18L and 18R are interposed between the left and right bearing portions 16b and 16b, and 17b and 17b having these end portion bearing holes.

Each of the pair of side members 18L and 18R is composed of a flat plate member having such a width that it can slidably fit between a pair of bearing portions 16b and 16b arranged in the front/back direction of the vehicle body upper member 16 and a pair of bearing portions 17b and 17b arranged in the front/back direction of the vehicle body lower member 17. The flat surface portions of the side members 18L and 18R spread in the up/down direction and are disposed on both left and right sides of the vehicle body upper member 16 and the vehicle body lower member 17. Further, on both sides of each of the side members 18L and 18R, bearing holes are provided in four places corresponding to the pair of bearing holes of the vehicle body upper member 16 and the pair of bearing holes of the vehicle body lower member 17.

Among the eight bearing holes of the pair of side members 18L and 18R, in the four bearing holes located in the upper part, upper rotation support pins 21L and 21R that pass through bearing holes of the bearing portions 16b provided in four places in the vehicle body upper member 16 are respectively fitted and fixed in a rotatable manner. Further, among the eight bearing holes of the pair of side members 18L and 18R, in the four bearing holes located in the lower part, lower rotation support pins 22L and 22R that pass through bearing holes of the bearing portions 17b provided in four places in the vehicle body lower member 17 are respectively fitted and fixed in a rotatable manner. In this way, the vehicle body upper member 16 and vehicle body lower member 17, and the left and right side members 18L and 18R constitutes a parallel link mechanism.

Wheel drive units 14L and 14R are respectively attached on the respective outer surfaces of the pair of side members 18L and 18R. The wheel drive units 14L and 14R are, for example, constructed from an electric motor and a series of reduction gears that are coupled to the rotation shaft of the electric motor so that the power can be transmitted therethrough, and the like. Each of the wheel drive units 14L and 14R is composed of a fixed portion fixed to a respective one of the side members 18L and 18R, and a rotatable portion that is rotatablly supported on the fixed portion. A pair of wheels 13L and 13R are mounted to the respective fixed portions. The centers of rotation of the pair of wheels 13L and 13R that are supported on the pair of side members 18L and 18R through the pair of wheel drive units 14L and 14R in this manner are mutually aligned on the same axial centerline when the vehicle is placed on a flat road surface.

Further, the upper end portions of the pair of side members 18L and 18R protrude upward, as appropriate, from the top surface of the vehicle body upper member 16. Step portions 11L and 11R are respectively and individually mounted on the upper end surface of the side members 18L and 18R. The pair of step portions 11L and 11R are provided in such a manner that they are spaced by a certain distance in the left/right direction, i.e., the axle direction, and spread horizontally at the same height. The interval between the pair of step portions 11L and 11R may be made equal to a distance between both feet of a human when he/she stands naturally.

A pair of spring receiving portions 17c and 17c of the vehicle body lower member 17 are provided in the central portion in the left/right direction with a certain gap therebetween. A pair of spring receiving portions 16c and 16c of the vehicle body upper member 16 are provided in places corresponding to the pair of these spring receiving portions 17c and 17c. Further, coil springs 19L and 19r having suitable spring forces are placed between mutually corresponding spring receiving portions 16c and 17c in a state where they are appropriately compressed.

Further, an operation lever bracket 24 is mounted in the central portion in the left/right direction of the vehicle body upper member 16 and vehicle body lower member 17. The operation lever bracket 24 is composed of a saddle-shaped member that is structured so as to straddle the vehicle body upper member 16 in the front/back direction. A front portion is provided in front of the operation lever bracket 24 and extends to the lower portion of the vehicle body lower member 17. A rear portion is provided behind the operation lever bracket 24 and extends nearly to the lower portion of the vehicle body upper member 16. A fitting portion used to fixedly support the operation bar 154 is provided on the top surface of the operation lever bracket 24. In the front portion of the operation lever bracket 24, bearing holes are provided in places that respectively correspond to the front central bearing hole of the vehicle body upper member 16 and the central bearing hole of the vehicle body lower member 17. In the rear portion of the operation lever bracket 24, a bearing hole is provided in a place that corresponds to the rear central bearing hole of the vehicle body upper member 16.

An upper front rotation support shaft 25 is rotatablly fitted in the upper central bearing hole in the front portion of the operation lever bracket 24. An upper rear rotation support shaft (not shown) is rotatablly fitted in the central bearing hole in the rear portion of the operation lever bracket 24. The axial centerline of the upper front rotation support shaft 25 and the axial centerline of the upper rear rotation support shaft are aligned on the same axis so that their axial centerlines mutually coincide. The axial tip portion of the upper front rotation support shaft 25 fits in a hole provided in the front of the vehicle body upper member 16. That upper front rotation support shaft 25 is clamped and fixed by a setscrew passing through the front of the vehicle body upper member 16. The axial tip portion of the upper rear rotation support shaft fits in a hole provided in the rear of the vehicle body upper member 16. That upper rear rotation support shaft is clamped and fixed by a setscrew passing through the rear of the vehicle body upper member 16.

A lower front rotation support shaft 26 is rotatablly fitted in the lower central bearing hole in the front portion of the operation lever bracket 24. The operation lever bracket 24 is rotated in the roll direction X by using this lower front rotation support shaft 26 as the rotation center. To allow this operation lever bracket 24 to rotate within a predetermined range, concave chipped portions 16d and 17d are provided in the fronts of the vehicle body upper member 16 and the vehicle body lower member 17 so that contact with the operation lever bracket 24 is avoided. In order to detect the operation amount (rotation amount) of the operation bar 154, i.e., turning operation portion 15 through the rotation amount (rotation angle) of the operation lever bracket 24 in the roll direction X, an angle detection sensor 31 is attached to the upper front rotation support shaft 25.

The angle detection sensor 31 is composed of a shaft portion fixed to the upper front rotation support shaft 25, and a detection portion that detects an amount of rotational displacement relative to that shaft portion. The detection portion is fixed at one end of a fixed plate 32. The other end of this fixed plate 32 is fixed in the front portion of the operation lever bracket 24 by a setscrew. As for the angle detection sensor 31, for example, a potentiometer, a sensor having a variable-capacitor structure, or the like can be used. In this angle detection sensor 31, the inclination angle of the operation lever bracket 24 with respect to the vehicle body upper member 16 can be detected by using a fact that the resistance varies according to an amount of rotational displacement occurring between the shaft portion 31a and the detection portion 31b. The lower end potion of the operation bar 154 is fixed in the fitting portion of the operation lever bracket 24.

A power-supply storage portion is provided on the top surface of the operation lever bracket 24, which serves as the base of the turning operation portion 15. In the power-supply storage portion, a pair of wheel drive units 14L and 14R, a control device, and other electronic equipment, as well as a battery 28, which is a specific example of a power supply to supply electrical power to an electrical device and the like, are contained. The power-supply storage portion is covered with a power-supply cover 41.

A drive circuit to drive a pair of wheel drive units 14L and 14R and the like is contained in a housing portion 16a of the vehicle body upper member 16. Further, in the vehicle body lower member 17, a posture sensor unit that is posture detection means to detect the postures of the vehicle main body 12, the turning operation portion 15, and the like and output their detection signals, and a control device 46 that outputs a control signal used to control the driving of the pair of wheel drive units 14L and 14R and the like are provided. The control device 46 performs predetermined arithmetic processing based on a detection signal from the posture sensor unit 45, a detection signal from the angle detection sensor 31, and the like, and outputs a necessary control signal to the pair of the wheel drive units 14L and 14R and the like.

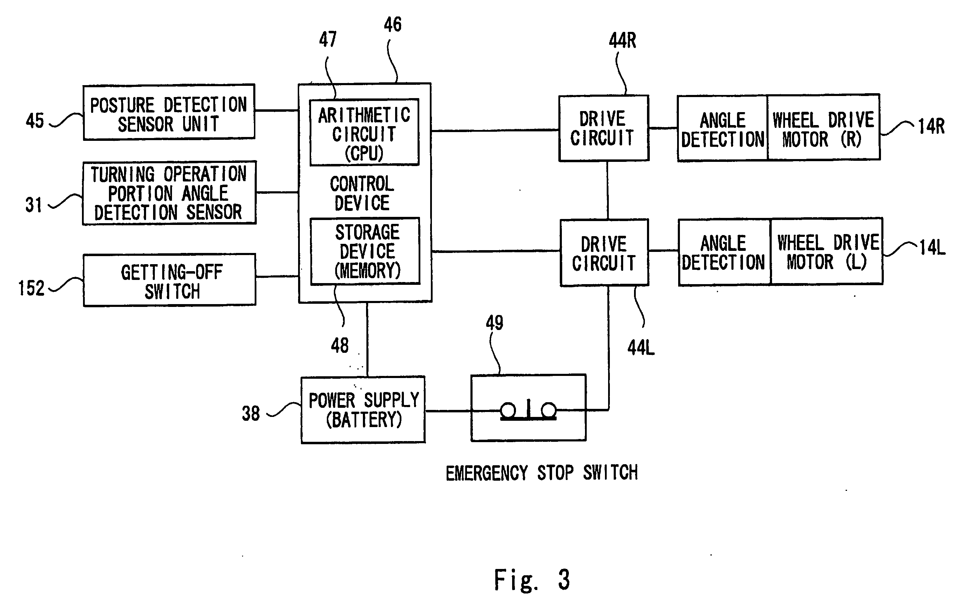

As shown in Fig. 3, the control device 46 includes, for example, an arithmetic circuit 47 having a micro computer (CPU), a storage device 48 having a program memory and a data memory, as well as other RAMs and ROMs and the like. A battery 38 and a pair of drive circuit 44L and 44R are connected to the control device 46. The battery 38 and the pair of drive circuit 44L and 44R are also connected through an emergency stop switch 49. The pair of drive circuit 44L and 44R individually control the rotation speeds and the rotation directions of the pair of wheels 13L and 13R. The pair of wheel drive units 14L and 14R are individually connected to them.

A detection signal from the angle detection sensor 31 that detects the inclination angle of the turning operation portion 15, a detection signal from the posture sensor unit 45, and a posture control stop signal from the getting-off switch 153 are supplied to this control device 46. The posture sensor unit 45 is used to detect an angular speed and an acceleration and controls those angular speed and traveling acceleration when the coaxial two-wheeled vehicle 10 is traveling. The posture sensor unit 45 is composed of, for example, a gyro-sensor and an acceleration sensor.

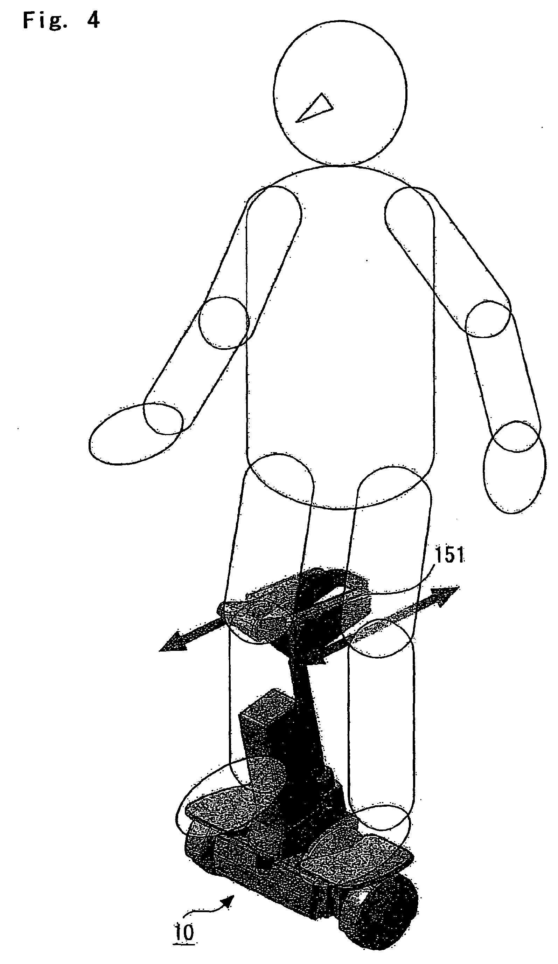

5 Fig. 4 shows a state where a passenger is on a coaxial two-wheeled vehicle in accordance with a first exemplary embodiment. As shown in the figure, there are open spaces in front of and behind the legs, in particular knees of the passenger, and thus they are in an unrestrained state.

For example, when the passenger tries to turn to the left with respect to the traveling direction of the vehicle, he/she applies a weight on the knee pad portions 151 by pressing the inner side of the right knee on the knee pad portion 151 and thereby tilting the turning operation portion 15 to the left. This tilting of the turning operation portion 15 is detected by the angle detection sensor 31. The angle detection sensor 31 outputs a detection signal to the control device 46. The control device 46 determines rotation speeds of the left and right wheels based on the angle information of the turning operation portion 15 obtained from the detection signal, and outputs a speed request signal to each of the drive circuit 44L and 44R. The drive circuit 44L and 44R drives the wheel drive units (motors) 14L and 14R according to the speed request signals. In this way, turning is implemented by generating a difference between the rotation speeds of the left and right wheels according to the inclination of the turning operation portion 15. Note that during the turning action, the step portions 11L and 11R and the left and right wheels 13L and 13R are inclined in the same direction as that of the turning operation portion 15. Therefore, the whole wheels including the passenger can be brought into a state where the centrifugal force can be easily coped with.

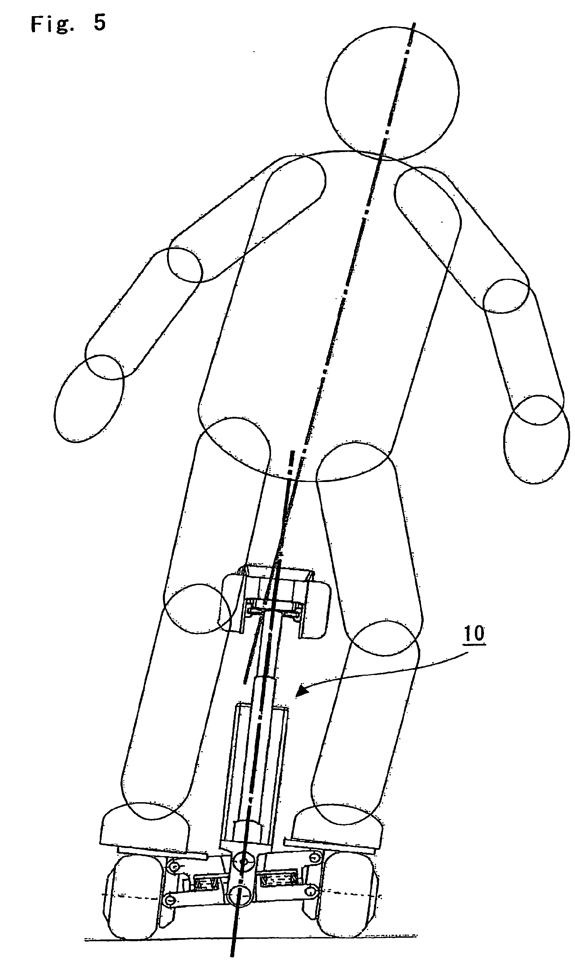

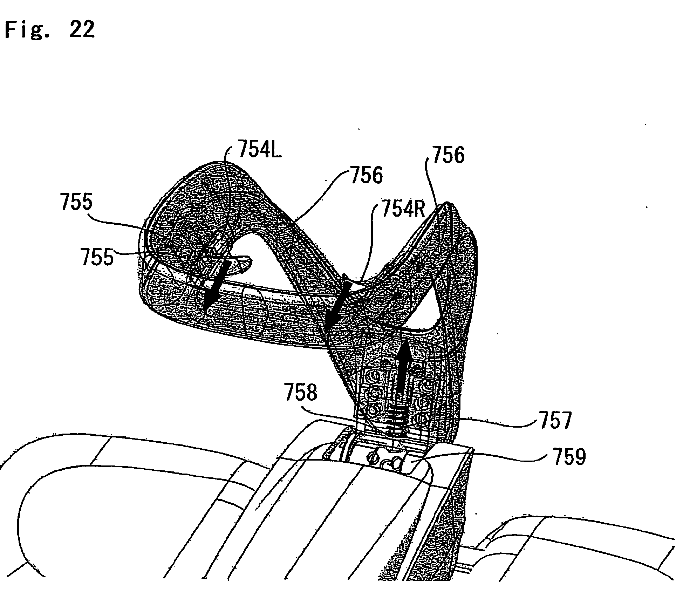

At this point, the leg on the inner side of the turning radius does not need to be in contact with the knee pad portion 151. Therefore, as shown in Fig. 5, it becomes possible to move the upper body inwardly beyond the turning operation portion 15. Therefore, in comparison to the vehicle structure shown in Figs. 22 to 24 of Patent document 1, the operational feeling of turning actions can be improved and higher turning angular speed can be achieved.

Further, when a passenger gets on the vehicle, the passenger can stabilize the movement of the vehicle by grasping the grip for use in getting on/off 152.

Next, the function of the getting-off switch 153 is explained. In the vehicle where the step portions 11L and 11R are tilted by the weight distribution on the left and right steps by a passenger so that turning is implemented, when the passenger tries to get off the vehicle by taking off his/her feet one by one, the weight on the step portion from which the foot is taken off first is reduced and therefore the vehicle is tilted in the roll direction, causing a turning action unintended by the passenger. Therefore, a getting-off switch 153 is provided, and it has such a mechanism that when a passenger pushes the getting-off switch 153 while the passenger is on the vehicle and the posture of the vehicle is controlled, the posture control of the vehicle is stopped, so that the passenger can get off the vehicle safely. When the passenger presses down the getting-off switch 153, a posture control stop signal is supplied to the control device 46. The control device 46 stops the posture control in response to this posture control stop signal.

By disposing this getting-off switch 153 on the side of the grip for use in getting on/off 152, the passenger presses down the getting-off switch 153 by his/her thumb while grasping the grip for use in getting on/off 152, and gets off the vehicle. It is safer because the passenger can support the vehicle in that state by using the grip for use in getting on/off 152 so that the vehicle, in which the posture control is stopped, does not tumble down. Further, by adding a control rule such that the vehicle automatically tilted backward when the getting-off switch 153 is pressed down, the passenger always and naturally gets off the vehicle to the rear of the vehicle. Therefore, the safety in the getting-off action is improved.

As has been explained above, a coaxial two-wheeled vehicle in accordance with a first exemplary embodiment adopts a vehicle structure that realizes turning by tilting the turning operation portion 15 having a degree of freedom in the roll direction. Therefore, the passenger tilts his/her body inwardly with respect to the vehicle that performs turning, i.e., in a direction toward the center of turning, so that it becomes possible to travel while cancelling the effect of the centrifugal force. Further, although the force is exerted in such a direction that it pushes back the tilting of the body of the passenger due to the effect of the centrifugal force while the vehicle is turning, it is possible to prevent the tilting of the body from being pushed back by firmly pressing down the step portion 11L or 11R with the leg on the outer side of the turning and thus maintaining the tilting of the turning operation portion 15. Therefore, the turning speed can be easily maintained and adjusted, and thus enabling an intuitive and speedy turning action to be realized with stability. Further, in a situation where accidental tilting of the turning operation portion 15 could occur during the traveling due to a disturbance such as unevenness on the road surface, the left and right legs are pressed inward and the turning operation portion 15 is sandwiched by both knees to firmly hold the turning operation portion 15 in the roll direction, so that the straight traveling can be maintained.

Further, since the turning operation portion 15 is disposed in a space between the legs of a passenger, the restrained state of the passenger's legs is relieved. Specifically, the passenger can not only get on and off the vehicle in the front/back directions without restraint, but also change the relative distance between both knees. In this way, for example, in a situation where the vehicle in forward motion runs into a step having a height the vehicle cannot run over and thereby tumbles down, the passenger can escape falling down by landing in front of the vehicle from one of the left and right feet while yielding to the effect of the inertial force, and thus getting off the vehicle safely. Similarly, even in a situation where an abnormality occurs in the control of the vehicle or where the vehicle avoids an obstacle that suddenly appears during the traveling, a quick getting-off action can be performed smoothly because restraint on the body is small, and thus giving an advantage in terms of safety.

Further, a passenger can get on and off the vehicle not only from behind the vehicle, but also from the front of the vehicle. Furthermore, by constructing the whole vehicle in a symmetrical shape in the front/back direction, the vehicle has no restriction in terms of its forward/backward directions. This feature makes getting on/off actions easer in a situation where a passenger needs to get on/off the vehicle in a narrow space.

Further, since the relative distance between both knees is not restrained, the passenger can actively move the upper body, and thus can realize unrestrained turning actions. If both knees are restrained, it is very difficult for the passenger to tilt the upper body to or beyond the inclination of the turning operation portion 15. By contrast, if the turning operation portion 15 is disposed between the legs of the passenger as in the case of the coaxial two-wheeled vehicle in accordance with a first exemplary embodiment, only the inner part of the leg on the outer side of the turning should be in contact with the turning operation portion 15 and the leg on the inner side of the turning need not be in contact with the turning operation portion 15. Therefore, it becomes possible to make the inclination of the upper body larger than the inclination of the turning operation portion 15. This feature enables the operability of the vehicle to be improved significantly in a situation where a rider leans the upper body inwardly with respect to the vehicle, i.e., in a direction toward the center of turning, extensively like the "lean-in action" of two-wheeled motor vehicles in an attempt to increase the turning speed, and in a similar situation.

### Second exemplary embodiment of the invention

In a second exemplary embodiment, the turning operation portion is formed while taking its design into account in comparison with the first exemplary embodiment of the invention, and it is characterized in that it includes a getting-off switch in the vicinity of the grip for use in getting on/off of that turning operation portion.

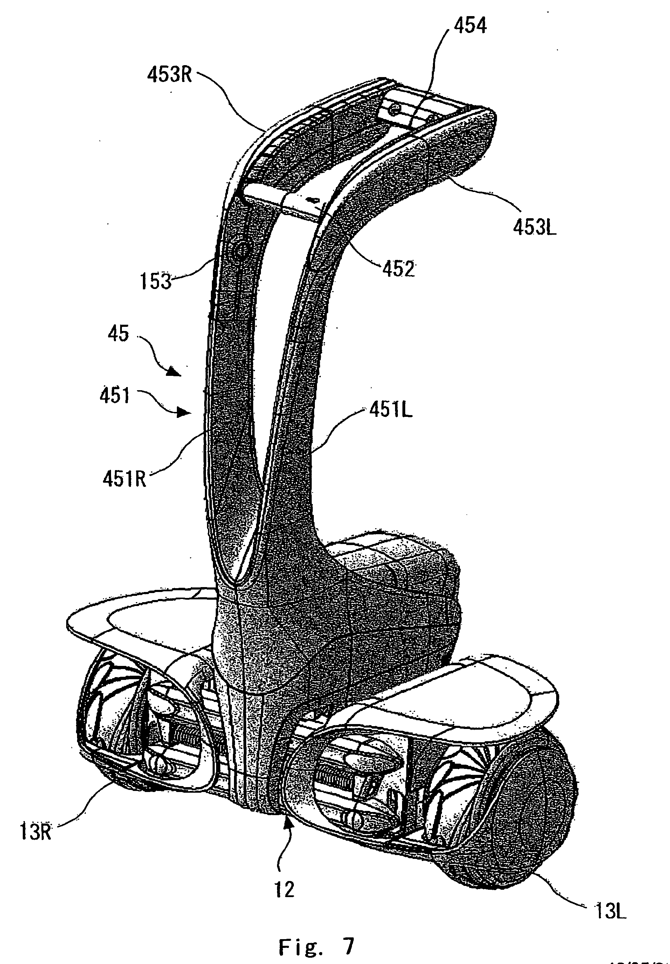

Fig. 7 is a perspective view of external appearance of a coaxial two-wheeled vehicle in accordance with a second exemplary embodiment. A vehicle main body 12 of a coaxial two-wheeled vehicle in accordance with this second exemplary embodiment has a similar structure to that of the first exemplary embodiment of the invention, and therefore its explanation is omitted.

The turning operation portion 45 includes a rising portion 451 that has a roughly U-shape when viewed from the front. Vertical strips 451L and 451R of the rising portion 451 are mutually coupled at their upper end portions by a grip for use in getting on/off 452. Further, in the upper end portions of the vertical strips 451L and 451R, knee pad portions 453L and 453R that extend backward are formed continuously with the respective vertical strips 451L and 451R. Furthermore, the knee pad portion 453L and 453R are mutually coupled at their rear end portions by a grip for transportation 454. Since it is formed continuously from the rising portion 451 to the knee pad portions 453L and 453R, it is superior in terms of design.

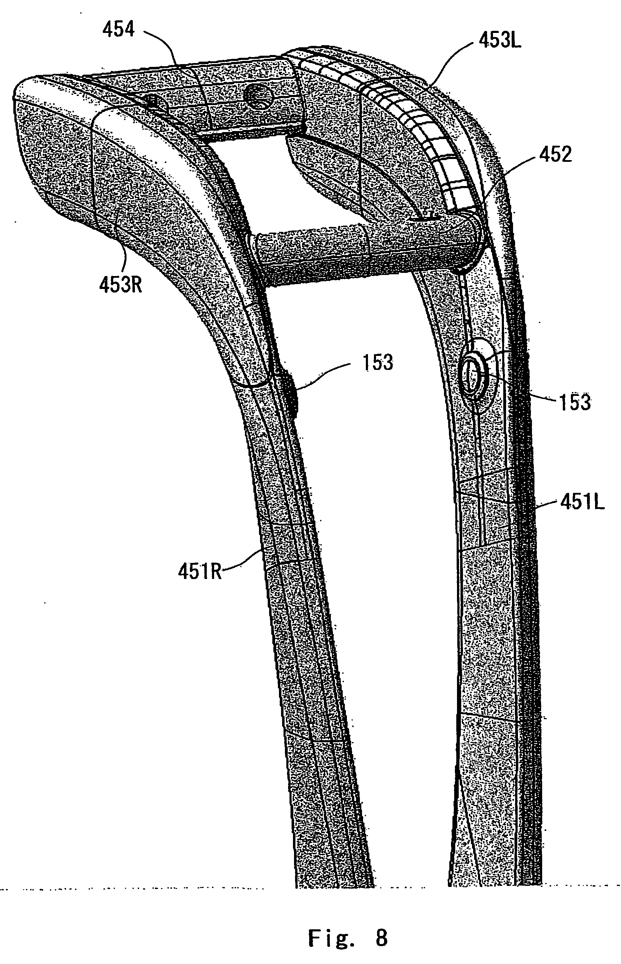

As shown in Fig. 8, a getting-off switch 153 to stop the posture control of the vehicle is provided in the inner parts of those vertical strips 451L and 451R in a place near the grip for use in getting on/off 452 of this turning operation portion 45.

The coaxial two-wheeled vehicle in accordance with a second exemplary embodiment can achieve similar advantageous effects to those of the above-described first exemplary embodiment of the invention. In addition, when a passenger gets off the vehicle, the passenger keeps one hand holding the grip for use in getting on/off 452 and pushes the getting-off switch 153 with the other hand, or by pushes the getting-off switch 153 by the index finger of the hand that is holding the grip for use in getting on/off 452, the passenger can get off the vehicle safely as in the case of the first exemplary embodiment of the invention.

Note that the getting-off switch 153 is preferably disposed in such a place that the passenger cannot touch when he/she is riding on the vehicle. It is possible to prevent the passenger from accidentally pushing the getting-off switch 153 when he/she is riding on the vehicle.

### Third exemplary embodiment of the invention

A third exemplary embodiment is characterized in that the turning operation portion is shorter in height in comparison to the first exemplary embodiment of the invention.

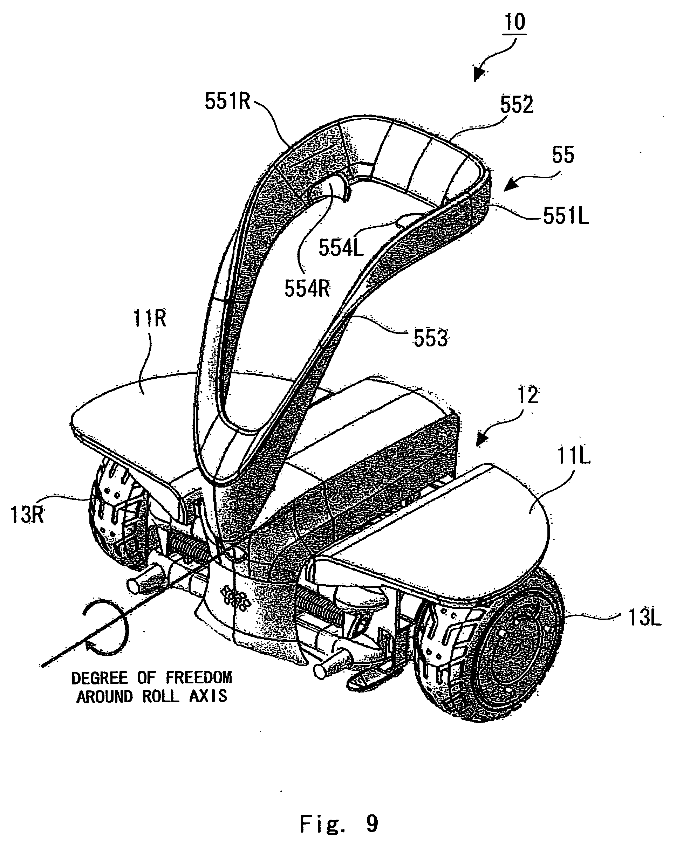

Fig. 9 is a perspective view of external appearance of a coaxial two-wheeled vehicle in accordance with a third exemplary embodiment. A vehicle main body 12 of a coaxial two-wheeled vehicle in accordance with this third exemplary embodiment has a similar structure to that of the first exemplary embodiment of the invention, and therefore its explanation is omitted.

The turning operation portion 55 has a ring shape, and is rotatablly supported at its lower end portion to the vehicle main body 12. Specifically, the turning operation portion 55 is integrally formed from calf pad portions 551L and 551R, a grip for transportation 552, a lower side coupling portion 553, and quick levers 554L and 554R.

The calf pad portions 551L and 551R are disposed so as to touch the respective calves of a passenger from the inside. These calf pad portions 551L and 551R extend in the front/back direction in a state where a passenger is on the vehicle.

The grip for transportation 552 is an upper side coupling member that couples the calf pad portions 551L and 551R at their upper parts. The grip for transportation 552 is formed integrally with the calf pad portions 551L and 551R. This grip for transportation 552 serves as a grip portion, i.e. , a handle when the coaxial two-wheeled vehicle 10 is carried. A user grips the grip for transportation 552 with one hand to carry the coaxial two-wheeled vehicle 10.

The lower side coupling portion 553 is a member that couples the calf pad portions 551L and 551R at their lower parts. The lower side coupling portion 553 is formed integrally with the calf pad portions 551L and 551R. The lower side coupling portion 553 is a U-shaped member that extends from one end of each of the calf pad portions 551L and 551R that extend in the front/back direction to the diagonally lower front side and couples in the vicinity of the vehicle main body 12 in a state where a passenger is on the vehicle. The lower side coupling portion 553 is supported at its lower end potion by the vehicle main body 12 in such a manner that the lower side coupling portion 553 can rotate in the roll direction.

The quick levers 554L and 554R are members that protrude inwardly from the inner surfaces of the calf pad portions 551L and 551R and are used when the vehicle is to be folded down. The function of the quick levers 554L and 554R will be explained in detail in a fifth exemplary embodiment of the invention.

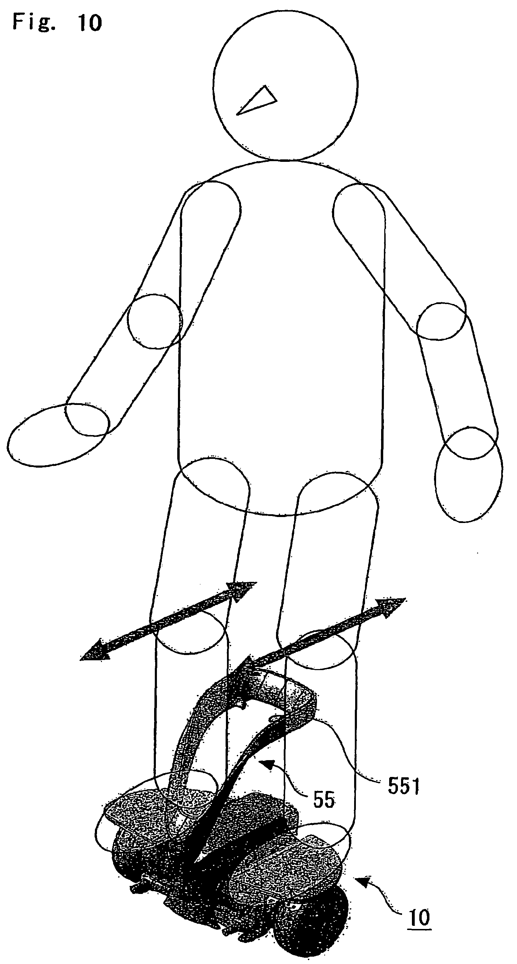

Fig. 10 shows a state where a passenger is on a coaxial two-wheeled vehicle in accordance with a third exemplary embodiment. As shown in the figure, the calf pad portions 551L and 551R touch the inner parts of the respective calves of the passenger.

The coaxial two-wheeled vehicle in accordance with a third exemplary embodiment can achieve similar advantageous effects to those of the above-described first exemplary embodiment of the invention. In addition, the height of the turning operation portion can be changed to the position at which the passenger's calves are located. Therefore, the reduction in size/weight can be achieved. Further, a coaxial two-wheeled vehicle in accordance with this third exemplary embodiment can be used more widely in comparison to the first and second exemplary embodiments of the invention in which riding is restricted when the rider wears clothes like a skirt. Further, in a situation where an obstacle appears suddenly on the course during the traveling and the rider tries to perform a sudden avoiding action, since the member located between the legs is short in height, the passenger can easily perform a getting-off action not only to the front of the vehicle but also to the side of the vehicle, and thus improving safety.

### Fourth exemplary embodiment of the invention

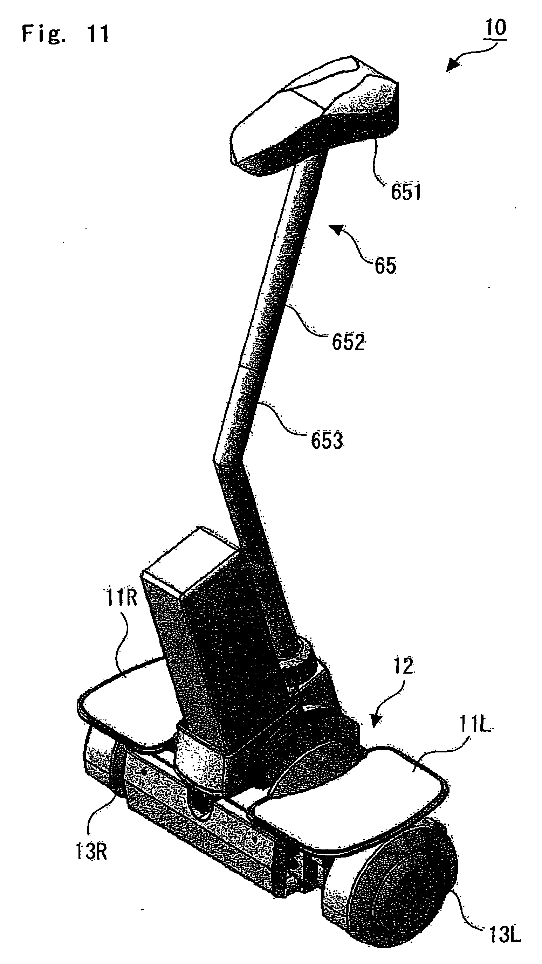

A coaxial two-wheeled vehicle in accordance with a fourth exemplary embodiment is characterized in that a saddle portion is provided at the upper end of the turning operation portion. Fig. 11 is a perspective view of external appearance of a coaxial two-wheeled vehicle in accordance with a fourth exemplary embodiment. A vehicle main body 12 of a coaxial two-wheeled vehicle in accordance with this fourth exemplary embodiment has a similar structure to that of the first exemplary embodiment of the invention, and therefore its explanation is omitted.

The turning operation portion 65 includes a saddle portion 651 and an operation bar 652. The saddle portion 651 is provided at the upper end of the operation bar 652. The saddle portion 651 has a similar structure to saddles of bicycles, and a passenger sits on it during the riding. As shown Fig. 11, the saddle portion 651 is narrow in the width direction, and therefore when a passenger tries to move his/her leg to the front and to the rear of the vehicle, the saddle portion 651 does not restrain such movements. In this way, the passenger can get on/off the vehicle without restraint not only to the front of the vehicle but also to the rear of the vehicle.

The operation bar 652 supports the saddle portion 651 from beneath, and is mounted on the vehicle main body 12 in such a manner that the operation bar 652 can rotate in the roll direction. An operation bar height adjustment portion 653 is provided in the operation bar 652. The operation bar height adjustment portion 653 is means to enable the length of the operation bar to be adjusted. In this way, the height of the saddle portion 651 can be changed for passengers of various heights.

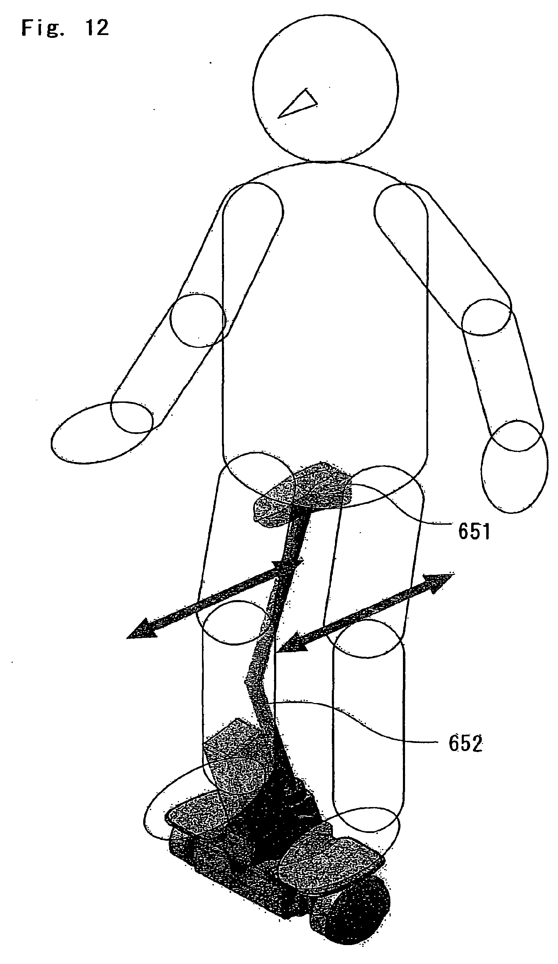

Fig. 12 is a perspective view showing a state where a passenger is on a coaxial two-wheeled vehicle in accordance with a fourth exemplary embodiment. As shown in the figure, a passenger sits on the saddle portion 651, and his/her legs are put on the step portions 11L and 11R.

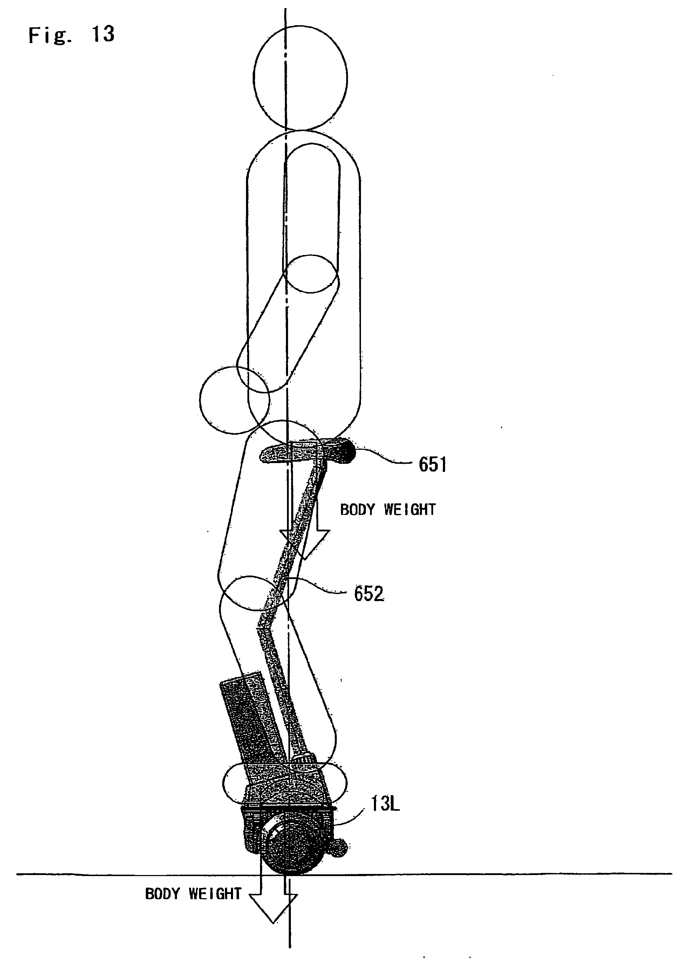

Fig. 13 is a side view showing a state where a passenger is on a coaxial two-wheeled vehicle in accordance with a fourth exemplary embodiment. In a state where a passenger is on the vehicle, the weight of the passenger is born by both the saddle portion 651 and the step portions 11L and 11R. In this way, the passenger can ride the vehicle in the form of sitting, and the fatigue caused by the riding can be thereby relieved in comparison with the standing riding posture. At the same time, an intuitive turning action can be performed by tilting the turning operation portion by the weight imposed on the step portions and the force exerted on the saddle portion by the leg in the lateral direction.

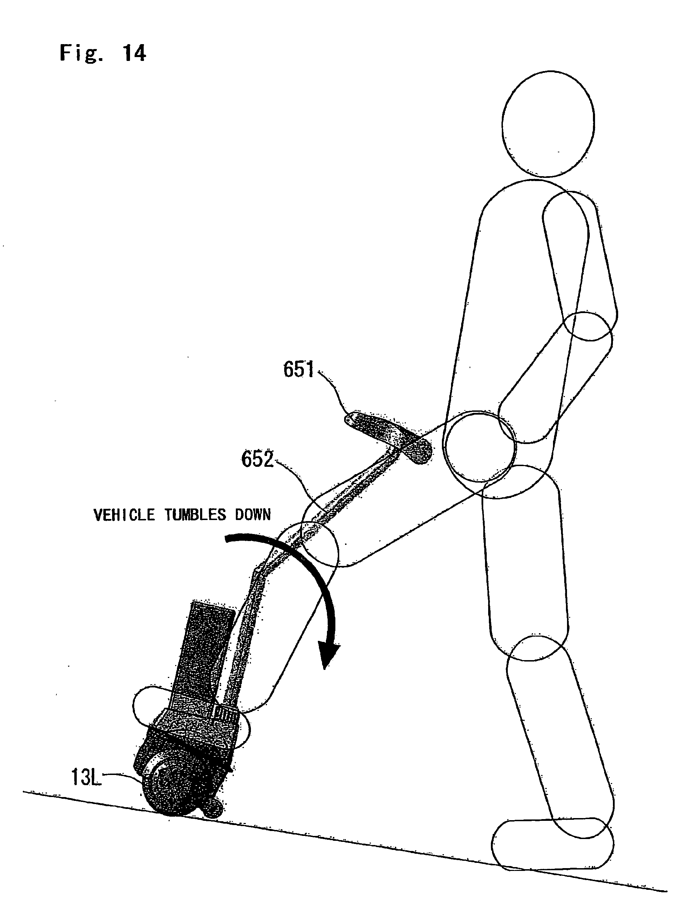

In a coaxial two-wheeled vehicle in accordance with this forth exemplary embodiment, it is difficult for a passenger to tilt the upper body to or beyond the inclination of the turning operation portion 15. However, it has a significant advantage over traditional coaxial two-wheeled vehicles of the type having a seat in that the passenger can perform a backward getting-off action to avoid danger. A type of coaxial two-wheeled vehicle as disclosed in Patent document 3 involves fatal risk, for example, in a situation where the vehicle tumbles down backward on a climbing road surface. To prevent the passenger from being injured or the like in such a situation, it requires a large-scale protective structure to protect the rear side. However, by adopting a structure in which a passenger can get on/off in front/back directions without restraint as with this forth exemplary embodiment, the passenger can get off to the rear of vehicle by landing one of the left and right feet in a dangerous situation in which the vehicle could tumbles backward as shown in Fig. 14, and therefore such a problem can be solved.

As explained above, the coaxial two-wheeled vehicle in accordance with a fourth exemplary embodiment can achieve similar advantageous effects to those of the above-described first exemplary embodiment of the invention. In addition, a passenger can ride the vehicle in the form of sitting, and the fatigue caused by the riding can be thereby relieved in comparison with the standing riding posture. At the same time, an intuitive turning action can be performed by tilting the turning operation portion by the weight imposed on the step portions and the force exerted on the saddle portion by the leg in the lateral direction.

### Fifth exemplary embodiment of the invention

A fifth exemplary embodiment is characterized in that the turning operation portion is shorter in height in comparison to the first exemplary embodiment of the invention, and also characterized by its transportability.

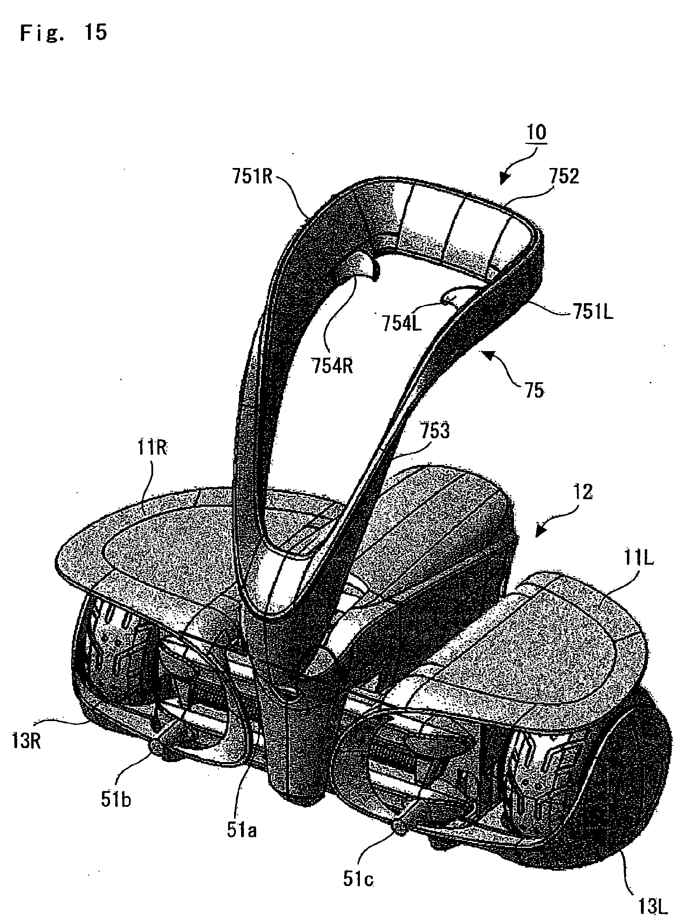

Fig. 15 is a perspective view of external appearance of a coaxial two-wheeled vehicle in accordance with a fifth exemplary embodiment. A vehicle main body 12 of a coaxial two-wheeled vehicle in accordance with this fifth exemplary embodiment has a similar structure to that of the first exemplary embodiment of the invention, and therefore its explanation is omitted.

The turning operation portion 75 has a ring shape, and is rotatablly supported at its lower end portion with to the vehicle main body 12. Specifically, the turning operation portion 75 is integrally formed from calf pad portions 751L and 751R, a grip for transportation 752, a lower side coupling portion 753, and quick levers 754L and 754R.

The calf pad portions 751L and 751R are disposed so as to touch the respective calves of a passenger from the inside. These calf pad portions 751L and 751R extend in the front/back direction in a state where a passenger is on the vehicle.

The grip for transportation 752 is an upper side coupling member that couples the calf pad portions 751L and 751R at their upper parts. The grip for transportation 752 is formed integrally with the calf pad portions 751L and 751R. This grip for transportation 752 serves as a grip portion, i.e., a handle when the coaxial two-wheeled vehicle 10 is carried. A user grips the grip for transportation 752 with one hand to carry that coaxial two-wheeled vehicle 10.

The lower side coupling portion 753 is a member that couples the calf pad portions 751L and 751R at their lower parts. The lower side coupling portion 753 is formed integrally with the calf pad portions 751L and 751R. The lower side coupling portion 753 is a U-shaped member that extends from one end of each of the calf pad portions 751L and 751R that extend in the front/back direction to the diagonally lower front side and couples in the vicinity of the vehicle main body 12 in a state where a passenger is on the vehicle. The lower side coupling portion 753 is supported at its lower end potion by the vehicle main body 12 in such a manner that the lower side coupling portion 753 can rotate in the roll direction.

The quick levers 754L and 754R are members that protrude inwardly from the inner surfaces of the calf pad portions 751L and 751R and are used when the vehicle is to be folded down.

A ground-touching portion 51a is located in the lower end potion of the turning operation portion 75. Each of ground-touching portions 51b and 51c is a cylindrical protrusion that is provided in and protruded from the front of the vehicle main body 12.

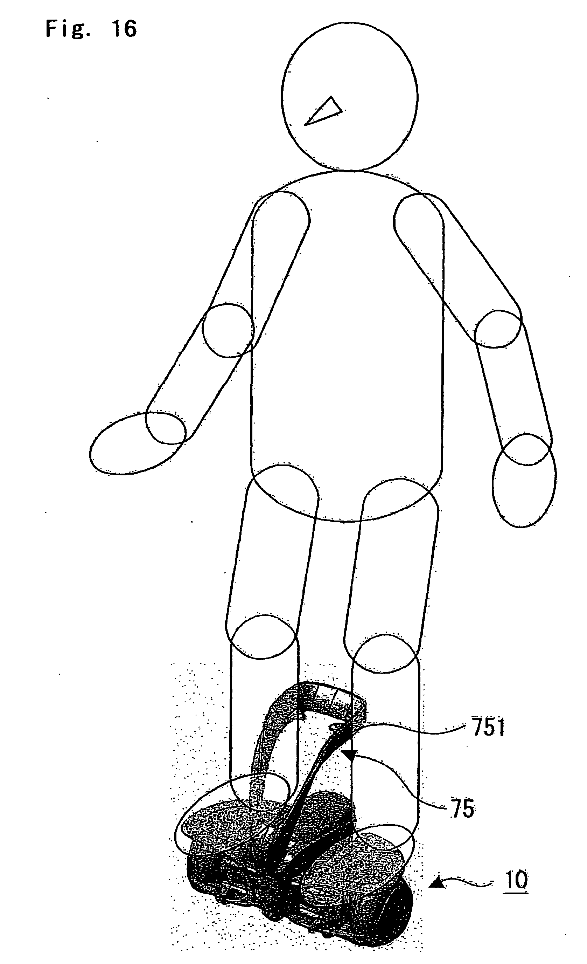

Fig. 16 shows a state where a passenger is on a coaxial two-wheeled vehicle in accordance with a fifth exemplary embodiment. As shown in the figure, the calf pad portions 751L and 751R touch the inner parts of the respective calves of the passenger.

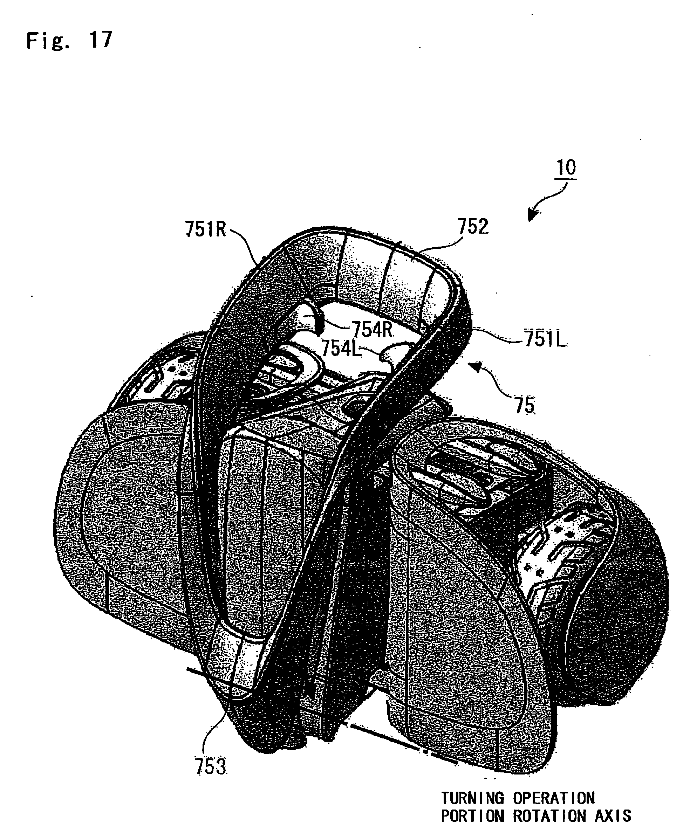

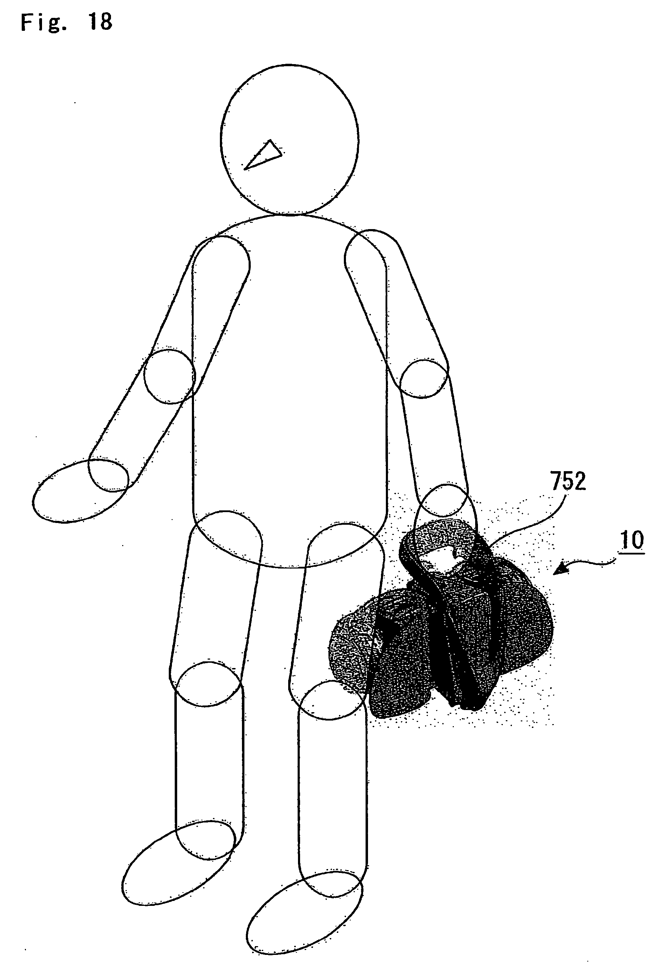

Fig. 17 shows external appearance of a transportation state of this vehicle. Further, Fig. 18 shows a state where a user grasps/carries the vehicle. The turning operation portion 75 of the vehicle has a rotation shaft in its base portion. The turning operation portion 75 is folded over in a direction toward the vehicle main body 12 by using the rotation shaft as the center. The rotation shaft is parallel to the axle of the wheels 13L and 13R, i.e., the pitch axis.

In the coaxial two-wheeled vehicle shown in Fig. 15, three ground-touching portions 51a, 51b and 51c located in the front of the vehicle are positioned in the lower part of the vehicle in the transportation state shown in Fig. 18. Further, when the vehicle is placed on the ground, these ground-touching portions 51a, 51b and 51c touch the ground.

Further, by doing so, the folded turning operation portion 75 is positioned in the upper part of the vehicle. The grip for transportation 752, which is a part of structure of the turning operation portion 75, serves as a handle of the vehicle as shown in Fig. 18, and the grasping/carrying of the vehicle is thereby implemented. At this point, the vehicle takes a posture that is perpendicular to the ground as shown in Fig. 18. Therefore, the substantial occupied volume is minimized, and thereby the vehicle can be easily carried around.

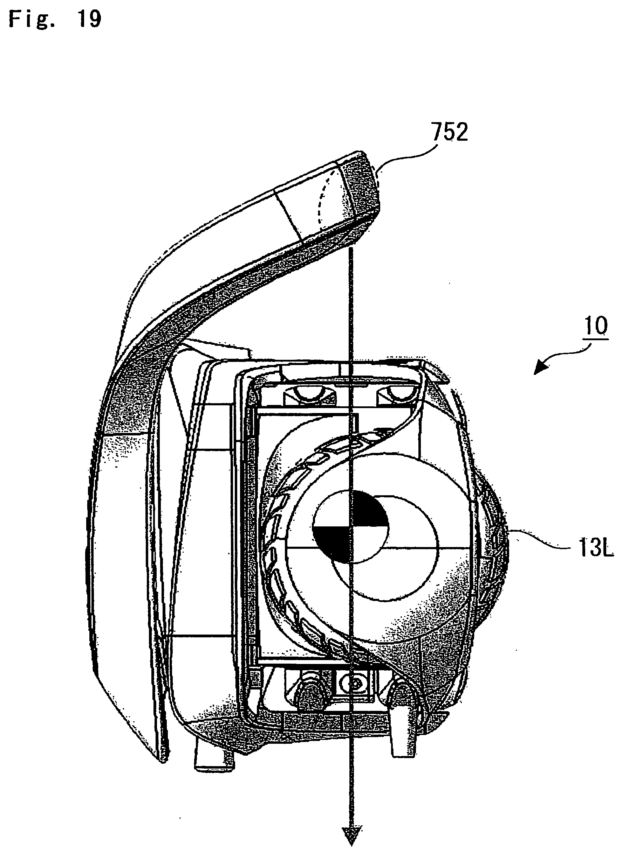

Fig. 19 shows the position of the center of gravity of the vehicle. A vehicle in accordance with a fifth exemplary embodiment of the present invention is constructed such that when it is grasped, the center of gravity of the vehicle is positioned on a perpendicular that is drawn from the grip for transportation 752 serving as a handle to the ground as shown in the figure, i.e., in a direction of the gravity. If the center of gravity is located in a place away from the perpendicular that is drawn from the grip for transportation 752 of the vehicle to the ground, a user needs to maintain the grasping against a large moment, and thus bearing a large burden. Alternatively, when the angle of vehicle is changed such that the center of gravity of the vehicle is located directly below the grip for transportation 752, as a result, the vehicle is inclined and the substantial occupied volume becomes larger, and thus making the vehicle inconvenient to carry around.

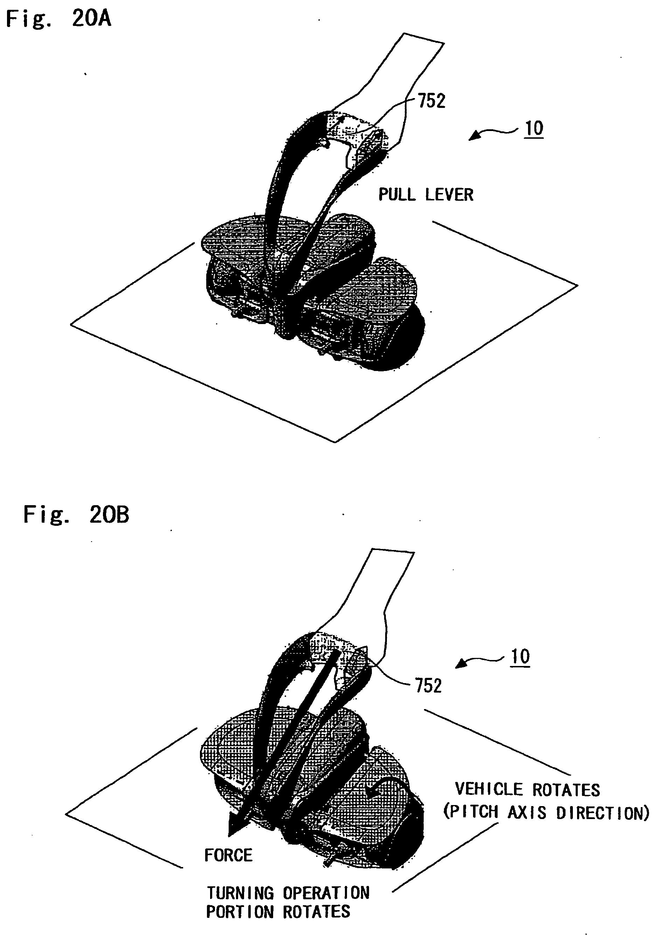

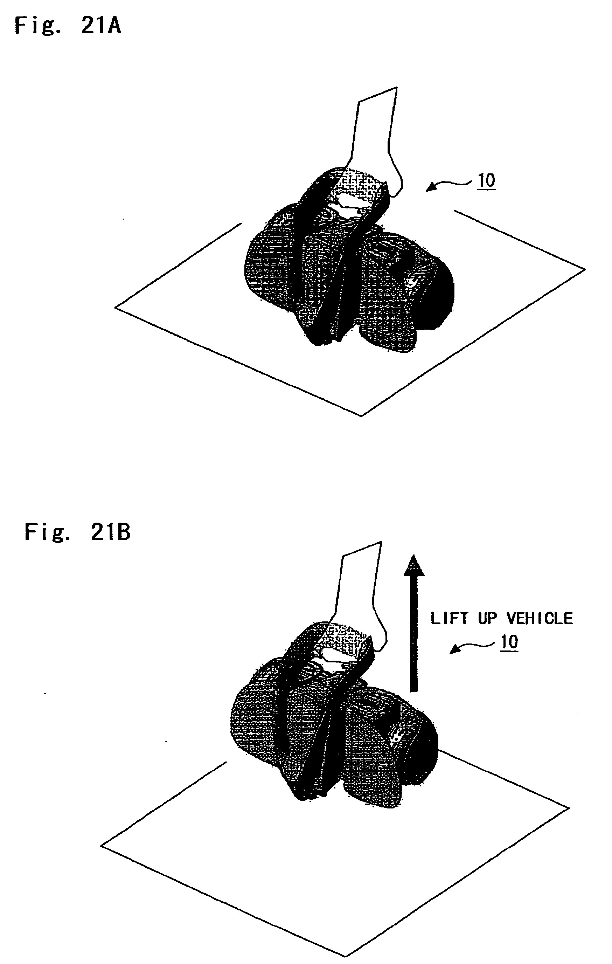

Figs. 20 and 21 show a folding action of the vehicle. Firstly, in a state where a user are grasping the grip for transportation 752 with four fingers other than the index finger, the user pulls one of the quick levers 754L and 754R installed in the front part of the grip for transportation 752 with the index finger (Fig. 20A). Since the lever is pulled, a pin that has locked the rotation shaft of the turning operation portion 75 is pulled out, and thus allowing the turning operation portion 75 to rotate. From this state, the user applies a force to the grip for transportation 752 in an obliquely front direction as shown in Fig. 20B while grasping the grip for transportation 752. As a result, the vehicle rotates in the pitch direction by using two ground-touching portions 51b and 51c on the lower side that touch the ground when the vehicle is folded over.

Consequently, the vehicle is in a state where it has made a quarter rotation as shown in Fig. 21A. In this way, three ground-touching portions 51a, 51b and 51c are positioned on the bottom side of the vehicle. At this point, when the user releases the quick lever 754L or 754R that has been pulled by the index finger, the pin that is used to lock the turning operation portion 75 is inserted into another hole on the shaft, and thus locking the rotation of the turning operation portion. The user grasps and raises the grip for transportation 752 the turning operation portion 75, and thus proceeding to the transportation state shown in Fig. 21B.

In this way, by arranging the positions of the grip for transportation 752 and the quick levers 754L and 754R of the vehicle as shown in Figs. 18 and 19, a user can perform actions from folding over the vehicle to lifting up the vehicle continuously with only one hand. Further, by performing the actions of Figs. 20 and 21 in a reverse direction, actions from setting the vehicle on the ground to unfolding the folding structure can be also implemented continuously.

Fig. 22 shows a detailed structure of the rotation shat of the turning operation portion 75. Each of the left and right quick levers 754L and 754R is constructed so as to move in a straight line on two guides 755 arranged in parallel. Further, both of the left and right quick levers 754L and 754R are coupled to a single lock pin 758 through the respective wires 756.

A turning operation portion shaft 759 is fixed to the vehicle main body 12. When the turning operation portion 75 is to be folded down, one of the left and right quick levers 754L and 754R is moved backward so that the wire 756 coupled to the quick lever 754L or 75R pulls up the lock pin 758 that has been inserted into one of the holes of the turning operation portion shaft 759, and thus allowing the turning operation portion 75 to rotate. When the turning operation portion 75 is rotated by a predetermined angle, the lock pin 758 moves to the position of the other hole of the turning operation portion shaft 759. Therefore, when the user releases the quick lever 754L or 754R that has been pulled by the user, the lock pin 758 is inserted into the hole by the effect of the spring force, and thus locking the rotation of the turning operation portion 75 again. The action to unfold the turning operation portion 75 is implemented by the reverse of these actions.

These mechanisms are configured in a horizontally symmetrical manner. For example, when the left-side quick lever 754L is pulled, the left wire 756 is pulled. As a result, the right-side wire 756 is pushed by the pulled-up lock pin 758 and moved to the rear of the vehicle, and the right-side quick lever 754R is thereby also pulled in an indirect manner. Regardless of which one of the quick levers 754L and 754R is pulled, the lock pin 758 can be released in a similar manner. Therefore, regardless of whether the use is left-handed or right-handed, the operation is easy to perform.

Further, the left and right quick levers 754L and 754R are spaced from each other. Therefore, a user can smoothly perform actions by fingers to proceed to the lever operation by the index finger as shown in Fig. 20A from a state where the user is firmly grasping the handle with five fingers.

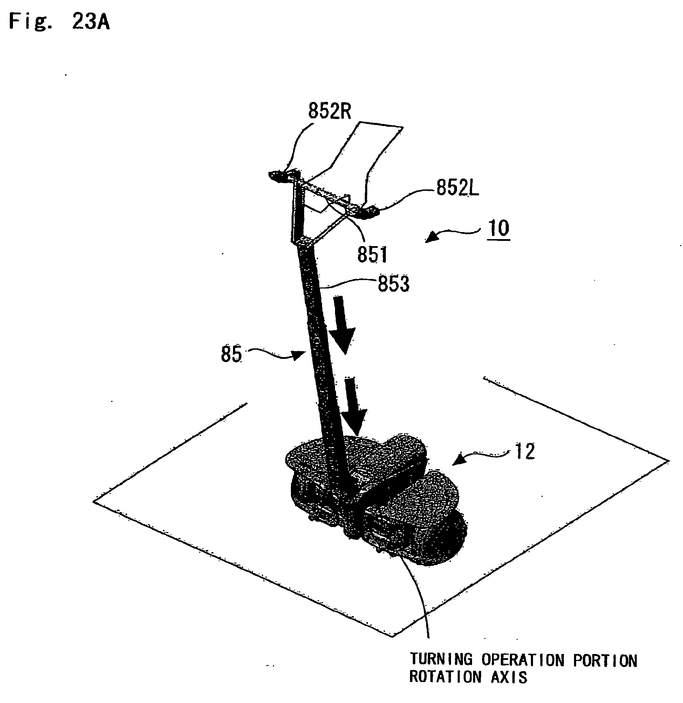

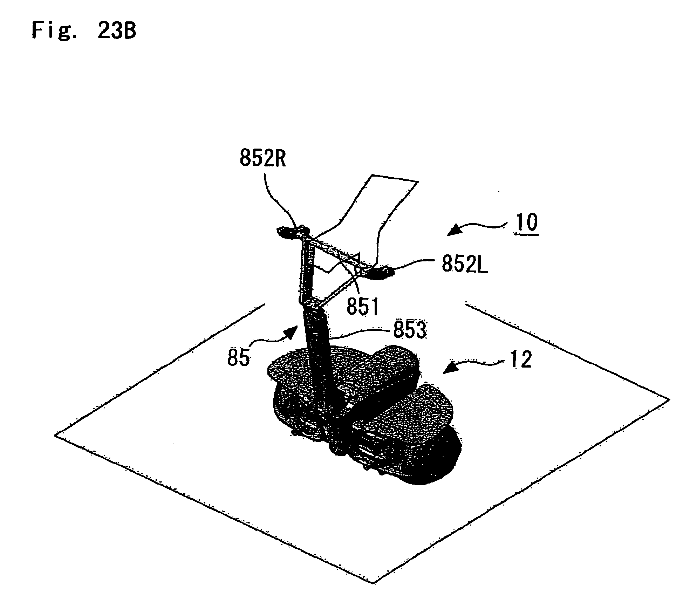

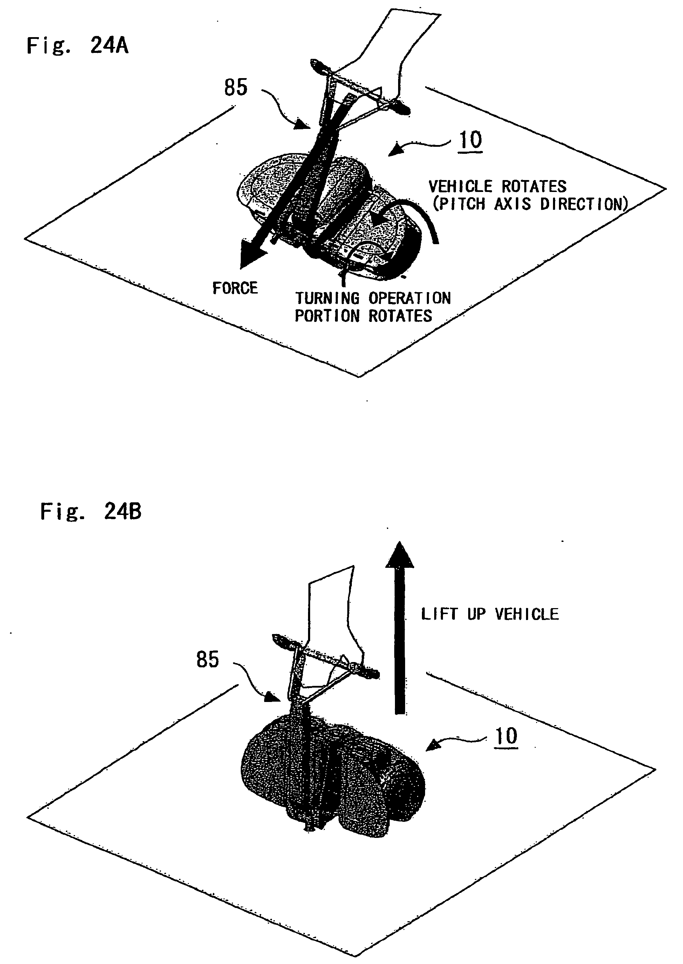

In the above explanation, vehicles having the calf pad turning operation portion have been described. However, a coaxial two-wheeled vehicle having a handle that is operated by hands and arms of a user can be also realized by using similar features. Figs. 23 and 24 show an example of a vehicle having a handle, and a series of actions from folding up the vehicle to lifting up the vehicle in this vehicle.

A handle 85 maintains the handle length in the riding state as shown in Fig. 23A, for example, by friction of two node portions and a turning operation portion rotation shaft portion. Further, it includes a grip 851 for transportation between left and right grips 852L and 852R that are used to operate the vehicle during the riding. When this vehicle is to be folded down for transportation, as shown in Fig. 23B, firstly, the handle 85 having a three-stage expansion/contraction structure 853 is contracted to a height equivalent to one stage by a downward action of the hand and arm of the user. From this state, similarly to a series of actions of Figs. 20 and 21, the vehicle is folded on the turning operation portion rotation shaft, and the vehicle main body makes a quarter rotation and proceeds to a state shown in Fig. 24AB. The user grasps the grip 851 and lifts up the vehicle, and thus continuously proceeding to a transportation state.

In the example of Figs. 23 and 24, the folding of the vehicle having the handle 85 is implemented by a user with one hand as in the case of Figs. 20 and 21. As for the fixing of the expanding/contracting handle, in addition to the method in which the posture is maintained by friction, a method in which the length of the handle and the turning operation portion rotation shaft are fixed before/after expansion/contraction by using a mechanism similar to that of the previously-described locking/releasing mechanism for the turning operation portion rotation shaft of Fig. 22 can be adopted.

As explained above, in a coaxial two-wheeled vehicle 10 in accordance with this exemplary embodiment, the vehicle includes the turning operation portion 75 to turn the vehicle, and the turning operation portion 75 also serves as a handle when the vehicle is carried. Therefore, both the high operability and transportability can be realized. Further, it is compact/lightweight by having the turning operation portion 75 that is operated by the legs of a user; the vehicle is reduced in size because the turning operation portion 75 is folded down when the vehicle is in a non-riding state; and the transportation of vehicle is easy because the grip for transportation 752 that is a part of the turning operation portion 75 serves as a grip portion when the vehicle is carried.

Further, the vehicle includes a handle 85 that is operated by the hand and arm of a user, and the handle 85 has an expanding/contracting mechanism and a folding mechanism. As a result, the vehicle is reduced in size. Furthermore, the transportation of vehicle is easy because the grip for transportation 852 of the handle 85 serves as a grip portion when the vehicle is carried.

Furthermore, it includes quick levers 754L and 754R that can be operated by a user with his/her finger in the vicinity of the grip portion for transportation. In this way, the user can fold down the vehicle by an operation performed by only one hand.

Further, the vehicle includes a grip for transportation 752 that enables a user to tilt the vehicle in the pitch direction when the vehicle is a non-riding state, and also includes quick levers 754L and 754R that can be operated by a user with his/her finger in the vicinity of this grip portion for transportation 752. In this way, a user can perform actions from folding down the vehicle to lifting up the vehicle, and from setting the vehicle to unfolding the vehicle continuously with one hand.

In particular, since the center of gravity of the vehicle is positioned on the perpendicular that is drawn from the grip for transportation 752 of the turning operation portion 75 that is folded over for transportation to the ground, the transportation of the vehicle is easy.

Further, a moving body for a single passenger that is compact/lightweight and has high operability has a structure suitable for transportation when it is in a non-riding state. In this way, the vehicle becomes much more convenient. Specifically, it becomes easier to bring a moving body for a single passenger into other transport facilities such as a train, a bus, a car, and the like. Therefore, continuous and various forms of traveling including these transport facilities can be realized, and thus improving the efficiency of traveling. This is expected to lead to solutions for the problem of illegal parking of bicycles in front of train stations, traffic congestion in cities due to the overuse of cars, the pollution of the environment, and the like. Further, by giving transportability to compact and lightweight vehicles, they can be used even in indoor facilities and the like in which there are stairs and the like, which have been significant obstacles for traditional moving bodies. Therefore, the moving body will be used more widely. Further, it is also convenient when it is to be loaded into a trunk of a car or when it is to be stored. In addition, secondary advantageous effects such as revitalization of traveling of ordinary citizens owing to creation of a new traveling culture, and accompanying economic growth can be also expected.

### Sixth exemplary embodiment of the invention

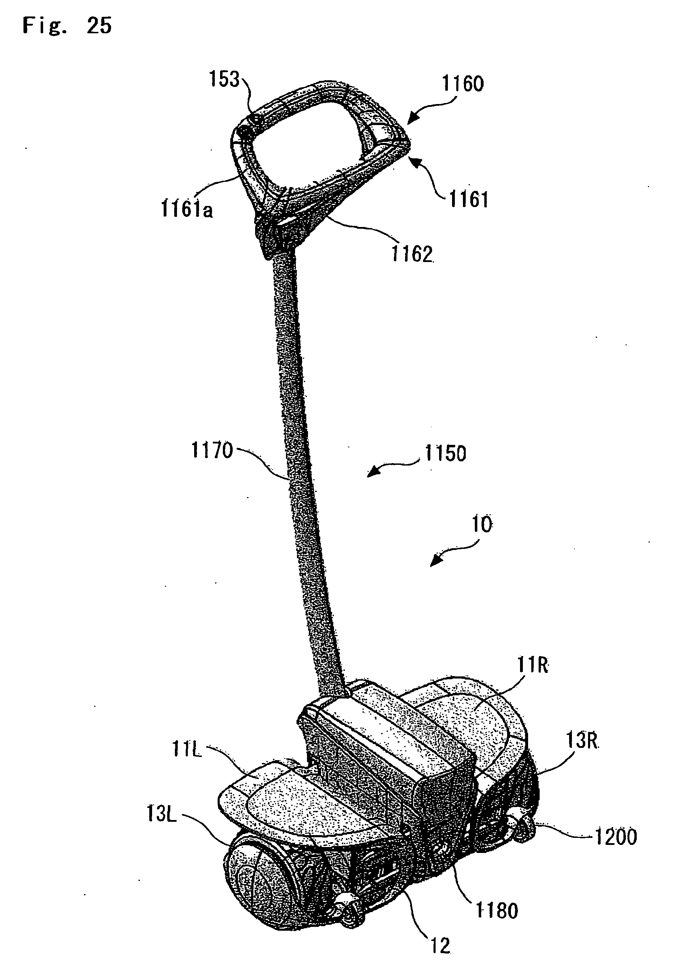

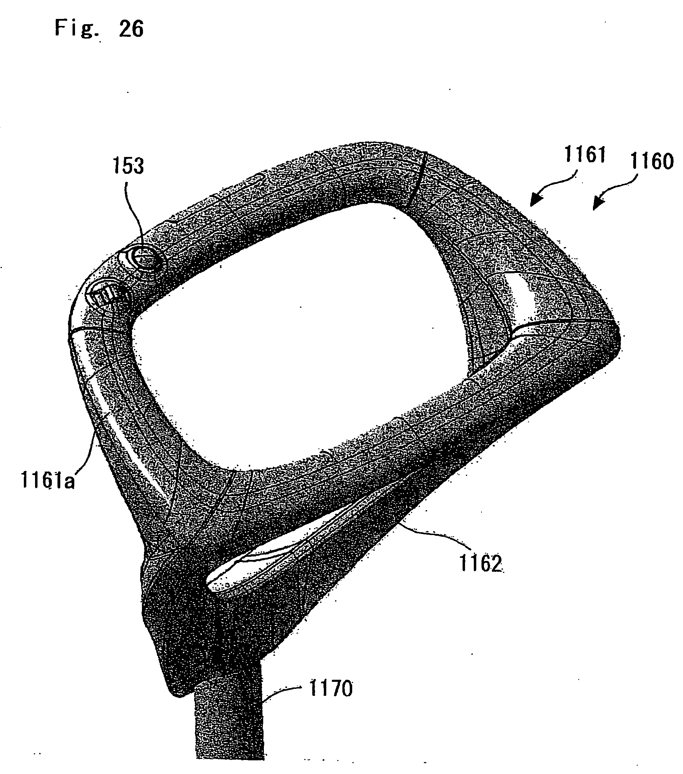

As shown in Figs. 25 and 26, a coaxial two-wheeled vehicle 10 in accordance with this exemplary embodiment is characterized in that a getting-off switch 153 is provided in the vicinity of the movable area of the hand of a user with which the user grasps the grip 1161 of the turning operation portion 1150.

That is, the turning operation portion 1150 in accordance with this exemplary embodiment includes a handle 1160, a handle bar 1170, and a handle bar bracket 1180. The turning operation portion 1150 is operation means that is tilted to the roll direction so that the vehicle performs a turning operation.

The handle 1160 includes a grip 1161 that has a ring shape when viewed from the top, and a support portion 1162 that support the grip 1161 from the behind. A passenger wraps around each of grip portions 1161a on both left and right sides of the ring grip 1161 from the top with his/her thumb and wraps around it from the bottom with the other four fingers, as if to grasp the control stick of an airplane, so that the passenger can operate the turning operation portion 1150 in a turning direction by tilting the turning operation portion 1150 and stabilize his/her posture when the vehicle is traveling and when the passenger gets on/off the vehicle. Further, for example, in the case where wheels for transportation 1200 are provided in the rear surfaces of the side members of the vehicle main body 12, a user can tilt the coaxial two-wheeled vehicle 10 backward by grasping that grip 1161 and carry the coaxial two-wheeled vehicle 10 by pulling it in a state where the coaxial two-wheeled vehicle 10 is supported by the wheels for transportation 1200. That is, the grip 1161 serves as both a grip for use in getting on/off and a grip for transportation.

In this grip 1161, a getting-off switch 153 is provided in the vicinity of the movable area of the hand of a user with which the user grasps the grip 1161, i.e., in the vicinity of the movable area of the thumb in this exemplary embodiment. When the passenger gets off the vehicle, the passenger keeps one hand holding the grip 1161 and pushes the getting-off switch 153 by the other hand, or keeps one hand holding the grip 1161 and consciously extends the thumb of that hand and pushes the getting-off switch 153 with the thumb, so that the passenger can get off the coaxial two-wheeled vehicle 10 safely as described above. Further, since such a situation that the passenger accidentally touches the getting-off switch 153 during the traveling does not happen, it is possible to prevent the coaxial two-wheeled vehicle 10 from being unintentionally stopped.

The lower end portion of the support portion 1162 supporting a grip 1161 like this is coupled to the handle bar 1170. The lower end portion of the handle bar 1170 is coupled to the upper end portion of the handle bar bracket 1180.

However, although a getting-off switch 153 is provided in the grip 1161 in this exemplary embodiment, the invention is not limited to this configuration. In short, only requirement is that a getting-off switch 153 should be provided in an area that cannot be reached by a user's hand during the traveling.

### Industrial Applicability

The present invention can be applied to a coaxial two-wheeled vehicle having two wheels disposed on the same axial centerline, in particular a coaxial two-wheeled vehicle on which a person rides and operates for traveling.

## Claims

1. A coaxial two-wheeled vehicle that, when a traveling direction is defined as a roll axis, can realize a turning action by a tilting movement of a turning operation portion toward the roll direction,
**characterized in that** the turning operation portion (75) is disposed between legs of a passenger and has a structure that is arranged to not restrain a movement of the leg in forward/backward directions of the vehicle, and
a portion of the turning operation portion (75) is arranged to come into contact with an inside leg of the passenger so that a turning operation is performed.

2. The coaxial two-wheeled vehicle according to Claim 1, wherein the turning operation portion (75) is arranged to come into contact with the passenger at a knee pad portion (151) disposed at a height of a knee of the passenger.

3. The coaxial two-wheeled vehicle according to Claim 2, wherein the turning operation portion (75) comprises an operation bar that is arranged to support the knee pad portion (151) from beneath, and an adjustment portion that adjusts a length of the operation bar.

4. The coaxial two-wheeled vehicle according to Claim 2 or 3, wherein the knee pad portion comprises a grip for use in getting on/off that can be grasped by a passenger on a front side in the traveling direction.

5. The coaxial two-wheeled vehicle according to Claim 4, further comprising a getting-off switch that is arranged to stop a posture control of a vehicle in the vicinity of the grip for use in getting on/off.

6. The coaxial two-wheeled vehicle according to Claim 1, wherein the turning operation portion is arranged to come into contact with the passenger at a calf pad portion disposed at a height of a calf of the passenger.

7. The coaxial two-wheeled vehicle according to Claim 6, further comprising a vehicle main body that is arranged to support the turning operation portion in such a manner that the turning operation portion is rotatable in the roll direction,
wherein the calf pad portion is formed in the vicinity of an upper end portion of a ring-shaped member that extends upward from the vicinity of the vehicle main body and bends backward.

8. The coaxial two-wheeled vehicle according to Claim 1, wherein the turning operation portion is arranged to come into contact with the passenger at a saddle portion which is provided on an upper end of the turning operation portion and on which the passenger can sit.

9. The coaxial two-wheeled vehicle according to Claim 8, wherein the turning operation portion comprises an operation bar that is arranged to support the saddle portion from beneath, and an adjustment portion that adjusts a length of the operation bar.

10. The coaxial two-wheeled vehicle according to any one of Claims 1 to 9, further comprising:
a vehicle main body that is arranged to support the turning operation portion in such a manner that the turning operation portion is rotatable in the roll direction;
a pair of wheels that are disposed on the same axis on both sides in a direction orthogonal to the traveling direction of the vehicle main body and rotatablly supported on the vehicle main body;
wheel driving means to independently and rotationally drive the pair of wheels; and
control means to control rotational driving of wheels by the wheel driving means according to a tilting movement of the turning operation portion in the roll direction.

11. The coaxial two-wheeled vehicle according to Claim 10, further comprising a step portion which is supported on the vehicle main body and rotatable in the roll direction in conjunction with the turning operation portion, and on which the passenger rides.

## Patentansprüche

1. Koaxiales zweirädriges Fahrzeug, dass, wenn eine Fahrtrichtung als eine Rollachse definiert ist, eine Drehaktion durch eine Kippbewegung eines Drehbetriebsabschnitts zur Rollrichtung hin realisieren kann,
**dadurch gekennzeichnet, dass** der Drehbetriebsabschnitt (75) zwischen den Beinen eines Passagiers angeordnet ist und einen Aufbau hat, der angeordnet ist, um eine Bewegung des Fußes in die vorwärts/rückwärts Richtungen des Fahrzeugs nicht zu beschränken, und
ein Abschnitt des Drehbetriebsabschnitts (75) angeordnet ist, um in Kontakt mit einer Innenseite des Beines des Passagiers zu kommen, sodass ein Drehbetrieb ausgeführt wird.

2. Koaxiales zweirädriges Fahrzeug nach Anspruch 1, wobei der Drehbetriebsabschnitt (75) angeordnet ist, um mit einem auf einer Höhe des Knies des Passagiers angeordneten Knieplattenabschnitt (151) in Kontakt mit dem Passagier zu kommen.

3. Koaxiales zweirädriges Fahrzeug nach Anspruch 2, wobei der Drehbetriebsabschnitt (75) eine Betriebsstange, der angeordnet ist, um den Knieplattenabschnitt von unten zu stützen, und einen Einstellungsabschnitt, der eine Länge der Betriebsstange einstellt, umfasst.

4. Koaxiales zweirädriges Fahrzeug nach Anspruch 2 oder 3, wobei der Knieplattenabschnitt einen Griff umfasst, der zum Ein/Aussteigen verwendet wird, der von einem Passagier auf einer Vorderseite in Fahrtrichtung gegriffen werden kann.

5. Koaxiales zweirädriges Fahrzeug nach Anspruch 4, des Weiteren einen Ausschalter umfassend, der angeordnet ist, um eine Stellungssteuerung des Fahrzeugs in der Umgebung des Griffs, der zum Ein/Aussteigen verwendet wird, zu stoppen.

6. Koaxiales zweirädriges Fahrzeug nach Anspruch 1, wobei der Drehbetriebsabschnitt angeordnet ist, um mit einem auf einer Höhe der Wade des Passagiers angeordneten Wadenplattenabschnitt in Kontakt mit dem Passagiert zu kommen.

7. Koaxiales zweirädriges Fahrzeug nach Anspruch 6, des Weiteren einen Fahrzeughauptkörper umfassend, der angeordnet ist, um den Drehbetriebsabschnitt in einer solchen Art zu stützen, dass der Drehbetriebsabschnitt in der Rollrichtung drehbar ist,
wobei der Wadenplattenabschnitt in der Umgebung eines oberen Endabschnitts eines ringförmigen Elements ausgebildet ist, das sich von der Umgebung des Fahrzeughauptkörpers aus nach oben hin erstreckt und nach hinten biegt.

8. Koaxiales zweirädriges Fahrzeug nach Anspruch 1, wobei der Drehbetriebsabschnitt angeordnet ist, um mit dem Passagier an einem Sattelabschnitt in Kontakt zu kommen, welcher an einem oberen Ende des Drehbetriebsabschnitts vorgesehenen ist und auf welchem der Passagier sitzen kann.

9. Koaxiales zweirädriges Fahrzeug nach Anspruch 8, wobei der Drehbetriebsabschnitt eine Betriebsstange, der angeordnet ist, um den Sattelabschnitt von unten zu stützen, und einen Einstellungsabschnitt, der eine Länge der Betriebsstange einstellt, umfasst.

10. Koaxiales zweirädriges Fahrzeug nach einem der Ansprüche 1 bis 9, des Weiteren aufweisend:
einen Fahrzeughauptkörper, der angeordnet ist, um den Drehbetriebsabschnitt in einer solchen Art zu stützen, dass der Drehbetriebsabschnitt in die Rollrichtung drehbar ist;
ein Paar von Rädern, die auf der gleichen Achse auf beiden Seiten in einer Richtung rechtwinklig zur Fahrtrichtung des Fahrzeughauptkörpers angeordnet und auf dem Fahrzeughauptkörper drehbar gestützt sind;
Radantriebseinheit, um das Paar von Rädern unabhängig und drehend anzutreiben; und
Steuereinheit, um den drehenden Antrieb der Räder durch die Radantriebseinheit nach einer Kippbewegung des Drehbetriebsabschnitts in Rollrichtung zu steuern.

11. Koaxiales zweirädriges Fahrzeug nach Anspruch 10, des Weiteren eine Trittabschnitt aufweisend, welcher auf dem Fahrzeughauptkörper abgestützt und in Verbindung mit dem Drehbetriebsabschnitt in Rollrichtung drehbar ist, und auf welchem der Passagier fährt.

## Revendications

1. Véhicule à deux roues coaxiales qui, lorsqu'une direction de déplacement est définie comme étant un axe de roulis, peut réaliser une action de pivotement par un mouvement d'inclinaison d'une partie de commande de pivotement vers la direction de roulis,
**caractérisé en ce que**
la partie de commande de pivotement (75) est disposée entre les jambes d'un passager et a une structure qui est agencée pour ne pas empêcher un mouvement de la jambe dans les directions vers l'avant/vers l'arrière du véhicule, et
une partie de la partie de commande de pivotement (75) est agencée pour venir en contact avec un intérieur de la jambe du passager de sorte qu'une opération de pivotement est réalisée.

2. Véhicule à deux roues coaxiales selon la revendication 1, dans lequel la partie de commande de pivotement (75) est agencée pour venir en contact avec le passager au niveau d'une partie de cale-genou (151) disposée à une hauteur d'un genou du passager.

3. Véhicule à deux roues coaxiales selon la revendication 2, dans lequel la partie de commande de pivotement (75) comprend une barre de commande qui est agencée pour supporter la partie de cale-genou (151) de dessous, et une partie d'ajustement qui ajuste une longueur de la barre de commande.

4. Véhicule à deux roues coaxiales selon la revendication 2 ou 3, dans lequel la partie de cale-genou comprend une poignée destinée à être utilisée pour monter/descendre qui peut être saisie par un passager sur un côté avant dans la direction de déplacement.

5. Véhicule à deux roues coaxiales selon la revendication 4, comprenant en outre un commutateur de descente qui est agencé pour arrêter un contrôle de posture d'un véhicule à proximité de la poignée destinée à être utilisée pour monter/descendre.

6. Véhicule à deux roues coaxiales selon la revendication 1, dans lequel la partie de commande de pivotement est agencée pour venir en contact avec le passager au niveau d'une partie de cale-mollet disposée à une hauteur d'un mollet du passager.

7. Véhicule à deux roues coaxiales selon la revendication 6, comprenant en outre un corps principal de véhicule qui est agencé pour supporter la partie de commande de pivotement de sorte que la partie de commande de pivotement peut tourner dans la direction de roulis,
dans lequel la partie de cale-mollet est formée à proximité d'une partie d'extrémité supérieure d'un élément de forme annulaire qui s'étend vers le haut à proximité du corps principal de véhicule et fléchit vers l'arrière.

8. Véhicule à deux roues coaxiales selon la revendication 1, dans lequel la partie de commande de pivotement est agencée pour venir en contact avec le passager au niveau d'une partie de selle qui est prévue sur une extrémité supérieure de la partie de commande de pivotement et sur laquelle le passager peut s'assoir.

9. Véhicule à deux roues coaxiales selon la revendication 8, dans lequel la partie de commande de pivotement comprend une barre de commande qui est agencée pour supporter la partie de selle de dessous, et une partie d'ajustement qui ajuste une longueur de la barre de commande.

10. Véhicule à deux roues coaxiales selon l'une quelconque des revendications 1 à 9, comprenant en outre :
un corps principal de véhicule qui est agencé pour supporter la partie de commande de pivotement de sorte que la partie de commande de pivotement peut tourner dans la direction de roulis ;
une paire de roues qui sont disposées sur le même axe des deux côtés dans une direction orthogonale à la direction de déplacement du corps principal de véhicule et supportées en rotation sur le corps principal de véhicule ;
des moyens d'entraînement de roue pour entraîner indépendamment et en rotation la paire de roues ; et
des moyens de commande pour commander l'entraînement en rotation des roues par les moyens d'entraînement de roue selon un mouvement d'inclinaison de la partie de commande de pivotement dans la direction de roulis.

11. Véhicule à deux roues coaxiales selon la revendication 10, comprenant en outre une partie de marchepieds qui est supportée sur le corps principal de véhicule et pouvant tourner dans la direction de roulis conjointement avec la partie de commande de pivotement, et sur laquelle le passager se trouve.
